# EUROPEAN PATENT APPLICATION

(11) **EP 4 708 272 A1**
(43) Date of publication of application: **11.03.2026**
(21) Application number: 24874812.1
(22) Date of filing: 29.02.2024
(51) Int. Cl.: G09G 3/3208, G09G 3/00, B60K 35/00, B60K 35/81

(54) **DISPLAY DEVICE FOR VEHICLE**

(30) Priority: 06.10.2023 KR 20230133270
(71) Applicant: LG Electronics Inc., Yeongdeungpo-gu Seoul 07336 (KR)
(72) Inventor: KIM, Taehwan, Seoul 06772 (KR); SONG, Jaewan, Seoul 06772 (KR); LEE, Chaeyoung, Seoul 06772 (KR); CHO, Sunghyun, Seoul 06772 (KR); KIM, Kyunglack, Seoul 06772 (KR); KIM, Daeyeon, Seoul 06772 (KR); KIM, Doyoung, Seoul 06772 (KR); RYOO, Seungseok, Seoul 06772 (KR)
(74) Representative: Vossius & Partner Patentanwälte Rechtsanwälte mbB
(86) International application number: PCT/KR2024/002708
(87) International publication number: WO 2025/075253

(57) **Abstract**

A display apparatus for a vehicle is disclosed. A display apparatus for a vehicle according to an embodiment of the present comprises: a display including an organic light emitting diode (OLED) panel comprising a public pixel and a privacy pixel; and a signal processing device configured to output an image signal to the display, wherein the signal processing device is configured to: divide and display an image into a public area based on the public pixel and a privacy area based on the privacy pixel; and sequentially move a boundary area between the public area and the privacy area. Accordingly, it is possible to reduce degradation of a boundary area of the OLED panel, where a viewing angle is adjustable.

## Description

### BACKGROUND

### 1. Field

The present disclosure relates to a display apparatus for a vehicle, and more particularly, to a display apparatus for a vehicle capable of reducing degradation or luminance difference in a boundary area of an organic light emitting diode panel, where a viewing angle is adjustable.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is provided in a cluster of a vehicle to display various types of information. In order to display vehicle driving information, various displays, such as an audio video navigation (AVN) display and a head-up display configured to output a projection image onto a windshield, are increasingly being mounted in the vehicle, in addition to the cluster.

Meanwhile, due to its fast response time, an organic light emitting diode (OLED) panel has been widely used as a cluster display and an AVN display to display various types of information, etc.

However, when an OLED panel is employed in a vehicle display (or in-vehicle display), degradation such as burn-in is more likely to occur.

### SUMMARY

It is an object of the present disclosure to provide a display apparatus for a vehicle that can reduce degradation or luminance difference in a boundary area of an organic light emitting diode panel, where a viewing angle is adjustable.

It is another object of the present disclosure to provide a display apparatus for a vehicle that can reduce degradation in an adaptive manner based on the temperature of each area of an organic light emitting diode panel.

It is yet another object of the present disclosure to provide a display apparatus for a vehicle that can suppress degradation in an adaptive manner based on a POP up mode or a POP down mode of an organic light emitting diode panel.

In accordance with an aspect of the present disclosure, the above and other objects can be accomplished by providing a display apparatus for a vehicle, the display apparatus comprising: a display including an organic light emitting diode (OLED) panel comprising a public pixel and a privacy pixel; and a signal processing device configured to output an image signal to the display, wherein the signal processing device is configured to: divide and display an image into a public area based on the public pixel and a privacy area based on the privacy pixel; and sequentially move a boundary area between the public area and the privacy area.

The signal processing device may be configured to sequentially move the boundary area toward the public area and then move toward the privacy area, or to sequentially move the boundary area toward the privacy area and then move toward the public area.

In response to the boundary area being deteriorated, the signal processing device may be configured to perform a degradation compensation mode for a surrounding area of the boundary area.

In response to the boundary area being deteriorated, the signal processing device may be configured to convert a part of the public area to the privacy area.

In response to the boundary area being deteriorated, the signal processing device may be configured to sequentially increase an area converted from the public area to the privacy area.

Based on a cumulative degradation amount of the boundary area, the signal processing device may be configured to change a size of an area converted from the public area to the privacy area.

In response to the luminance difference between the public area and the privacy area being greater than or equal to the predetermined value, the signal processing device may be configured to sequentially increase an area converted from the public area to the privacy area.

The signal processing device may be configured to increase a size of an area converted from the public area to the privacy area as the luminance difference between the public area and the privacy area increases.

A size of the public pixel may be greater than a size of the privacy pixel.

A viewing angle of light emitted from the public pixel may be greater than a viewing angle of light emitted from the privacy pixel.

In response to a second part of the public area being deteriorated, the signal processing device may be configured to perform a second degradation compensation mode.

Upon performing the second degradation compensation mode, the signal processing device may be configured to change luminance of the second part.

Upon performing the second degradation compensation mode, the signal processing device may be configured to convert the second part to the privacy area.

Based on an image display mode or a vehicle speed, the signal processing device may be configured to change a size of the public area or the privacy area.

The signal processing device may be configured to: control a cluster area corresponding to a first area of the display to operate as the public area; control an information display area corresponding to a second area of the display to operate as the public area; and control a passenger seat area corresponding to a third area of the display to operate as the privacy area.

In case in which the boundary area between the second area and the third area is deteriorated, or a luminance difference between the second area and the third area is greater than or equal to a predetermined value, the signal processing device may be configured to convert a part of the second area to the privacy area.

The signal processing device may be configured to: control a cluster area corresponding to a first area of the display to operate as the privacy area; control an information display area corresponding to a second area of the display to operate as the public area; and control a passenger seat area corresponding to a third area of the display to operate as the privacy area.

In response to the boundary area between the second area and the third area being deteriorated or a luminance difference between the second area and the third area being greater than or equal to a predetermined value, the signal processing device may be configured to convert a part of the second area to the privacy area.

In response to the boundary area between the first area and the second area being deteriorated or a luminance difference between the first area and the second area being greater than or equal to a predetermined value, the signal processing device may be configured to convert a part of the second area to the privacy area.

The display apparatus may further include: a first temperature detector disposed in a first area of a rear surface of the OLED panel; and a second temperature detector disposed in a second area of the rear surface of the OLED panel. The signal processing device may be configured to perform a first degradation compensation mode or a second degradation compensation mode based on a temperature difference between a first detected temperature by the first temperature detector and a second detected temperature by the second temperature detector.

The display apparatus may further include a motor driver configured to adjust a height of the OLED panel. The signal processing device may be configured to: perform the first degradation compensation mode in a POP up mode in which the height of the OLED panel is a first height; and in a POP down mode in which the height of the OLED panel is a second height less than the first height, perform the second degradation compensation mode in case in which a temperature difference between the first detected temperature and the second detected temperature is greater than or equal to a reference value and the first detected temperature is greater than the second detected temperature.

Upon performing the first degradation compensation mode, the signal processing device may be configured to: control a luminance compensation value of a first display area to be greater than a luminance compensation value of a second display area in case in which a cumulative degradation amount of the first display area is greater than a cumulative degradation amount of the second display area; and control the luminance compensation value of the second display area to be greater than the luminance compensation value of the first display area in case in which the cumulative degradation amount of the second display area is greater than the cumulative degradation amount of the first display area.

The display apparatus may further include: a first temperature detector disposed in a first area of a rear surface of the OLED panel; a second temperature detector disposed in a second area of the rear surface of the OLED panel; and a motor driver configured to adjust a height of the OLED panel. In a POP down mode in which a height of the OLED panel decreases, the signal processing device may be configured to change luminance of the first area or the second area in response to a temperature difference between the first area and the second area being greater than or equal to a reference value.

In accordance with another aspect of the present disclosure, there is provided a display apparatus for a vehicle, the display apparatus comprising: a display including an organic light emitting diode (OLED) panel comprising a public pixel and a privacy pixel; and a signal processing device configured to output an image signal to the display, wherein, in response to a boundary area between a public area based on the public pixel and a privacy area based on the privacy pixel being deteriorated or a luminance difference between the public area and the privacy area being greater than or equal to a predetermined value, the signal processing device may be configured to convert a part of the public area to the privacy area.

### EFFECTS OF THE DISCLOSURE

A display apparatus for a vehicle according to an embodiment of the present disclosure includes: a display including an organic light emitting diode (OLED) panel comprising a public pixel and a privacy pixel; and a signal processing device configured to output an image signal to the display. The signal processing device is configured to: divide and display an image into a public area based on the public pixel and a privacy area based on the privacy pixel; and sequentially move a boundary area between the public area and the privacy area. Accordingly, it is possible to reduce degradation of the boundary area of the OLED panel.

The signal processing device may be configured to sequentially move the boundary area toward the public area and then move toward the privacy area, or to sequentially move the boundary area toward the privacy area and then move toward the public area. Accordingly, it is possible to reduce degradation of the boundary area of the OLED panel.

In response to the boundary area being deteriorated, the signal processing device may be configured to perform a degradation compensation mode for a surrounding area of the boundary area. Accordingly, it is possible to reduce degradation or luminance difference in the boundary area of the OLED panel.

In response to the boundary area being deteriorated, the signal processing device may be configured to convert a part of the public area to the privacy area. Accordingly, it is possible to reduce degradation or luminance difference in the boundary area of the OLED panel.

In response to the boundary area being deteriorated, the signal processing device may be configured to sequentially increase an area converted from the public area to the privacy area. Accordingly, it is possible to reduce degradation or luminance difference in the boundary area of the OLED panel.

Based on a cumulative degradation amount of the boundary area, the signal processing device may be configured to change a size of an area converted from the public area to the privacy area. Accordingly, it is possible to reduce degradation or luminance difference in the boundary area of the OLED panel.

In response to the luminance difference between the public area and the privacy area being greater than or equal to the predetermined value, the signal processing device may be configured to sequentially increase an area converted from the public area to the privacy area. Accordingly, it is possible to reduce degradation or luminance difference in the boundary area of the OLED panel.

The signal processing device may be configured to increase a size of an area converted from the public area to the privacy area as the luminance difference between the public area and the privacy area increases. Accordingly, it is possible to reduce degradation or luminance difference in the boundary area of the OLED panel.

A size of the public pixel may be greater than a size of the privacy pixel, thereby allowing the public pixel and the privacy pixel to have different viewing angles.

A viewing angle of light emitted from the public pixel may be greater than a viewing angle of light emitted from the privacy pixel, thereby allowing the public pixel and the privacy pixel to have different viewing angles.

In response to a second part of the public area being deteriorated, the signal processing device may be configured to perform a second degradation compensation mode. Accordingly, it is possible to reduce degradation or luminance difference in the boundary area of the OLED panel.

Upon performing the second degradation compensation mode, the signal processing device may be configured to change luminance of the second part. Accordingly, it is possible to reduce degradation of a part or portion of the OLED panel.

Upon performing the second degradation compensation mode, the signal processing device may be configured to convert the second part to the privacy area. Accordingly, it is possible to reduce degradation of a part or portion of the OLED panel.

Based on an image display mode or a vehicle speed, the signal processing device may be configured to change a size of the public area or the privacy area. Accordingly, it is possible to display an image to correspond to an image display mode or a vehicle speed.

The signal processing device may be configured to: control a cluster area corresponding to a first area of the display to operate as the public area; control an information display area corresponding to a second area of the display to operate as the public area; and control a passenger seat area corresponding to a third area of the display to operate as the privacy area, thereby enabling the display to operate as a switchable privacy display.

In response to the boundary area between the second area and the third area being deteriorated or a luminance difference between the second area and the third area being greater than or equal to a predetermined value, the signal processing device may be configured to convert a part of the second area to the privacy area. Accordingly, it is possible to reduce degradation or luminance difference in the boundary area of the OLED panel.

The signal processing device may be configured to: control a cluster area corresponding to a first area of the display to operate as the privacy area; control an information display area corresponding to a second area of the display to operate as the public area; and control a passenger seat area corresponding to a third area of the display to operate as the privacy area, thereby enabling the display to operate as a switchable privacy display.

In response to the boundary area between the second area and the third area being deteriorated or a luminance difference between the second area and the third area being greater than or equal to a predetermined value, the signal processing device may be configured to convert a part of the second area to the privacy area. Accordingly, it is possible to reduce degradation or luminance difference in the boundary area of the OLED panel.

In response to the boundary area between the first area and the second area being deteriorated or a luminance difference between the first area and the second area being greater than or equal to a predetermined value, the signal processing device may be configured to convert a part of the second area to the privacy area. Accordingly, it is possible to reduce degradation or luminance difference in the boundary area of the OLED panel.

The display apparatus may further include: a first temperature detector disposed in a first area of a rear surface of the OLED panel; and a second temperature detector disposed in a second area of the rear surface of the OLED panel. The signal processing device may be configured to perform a first degradation compensation mode or a second degradation compensation mode based on a temperature difference between a first detected temperature by the first temperature detector and a second detected temperature by the second temperature detector. Accordingly, it is possible to reduce degradation in an adaptive manner based on the temperature of each area of the OLED panel.

The display apparatus may further include a motor driver configured to adjust a height of the OLED panel. The signal processing device may be configured to: perform the first degradation compensation mode in a POP up mode in which the height of the OLED panel is a first height; and in a POP down mode in which the height of the OLED panel is a second height less than the first height, perform the second degradation compensation mode in case in which a temperature difference between the first detected temperature and the second detected temperature is greater than or equal to a reference value and the first detected temperature is greater than the second detected temperature. Accordingly, it is possible to suppress degradation in an adaptive manner based on the POP up mode or the POP down mode of the OLED panel.

Upon performing the first degradation compensation mode, the signal processing device may be configured to: control a luminance compensation value of a first display area to be greater than a luminance compensation value of a second display area in case in which a cumulative degradation amount of the first display area is greater than a cumulative degradation amount of the second display area; and control the luminance compensation value of the second display area to be greater than the luminance compensation value of the first display area in case in which the cumulative degradation amount of the second display area is greater than the cumulative degradation amount of the first display area. Accordingly, it is possible to reduce degradation in an adaptive manner based on the temperature of each area of the OLED panel.

The display apparatus may further include: a first temperature detector disposed in a first area of a rear surface of the OLED panel; a second temperature detector disposed in a second area of the rear surface of the OLED panel; and a motor driver configured to adjust a height of the OLED panel. In a POP down mode in which a height of the OLED panel decreases, the signal processing device may be configured to change luminance of the first area or the second area in response to a temperature difference between the first area and the second area being greater than or equal to a reference value. Accordingly, it is possible to reduce degradation in an adaptive manner based on the temperature of each area of the OLED panel.

A display apparatus for a vehicle according to another embodiment of the present disclosure includes: a display including an organic light emitting diode (OLED) panel comprising a public pixel and a privacy pixel; and a signal processing device configured to output an image signal to the display. In response to a boundary area between a public area based on the public pixel and a privacy area based on the privacy pixel being deteriorated or a luminance difference between the public area and the privacy area being greater than or equal to a predetermined value, the signal processing device is configured to convert a part of the public area to the privacy area. Accordingly, it is possible to reduce degradation or luminance difference in the boundary area of the OLED panel.

### BRIEF DESCRIPTION OF THE DRAWINGS

FIG. 1A illustrates an example of the exterior and interior of a vehicle.
FIG. 1B illustrates another example of the exterior and interior of a vehicle.
FIG. 1C illustrate various examples of a display of FIG. 1A or FIG. 1B.
FIG. 2 illustrates the outer appearance of a display apparatus for vehicle according to an embodiment of the present disclosure.
FIG. 3 illustrates an exemplary internal block diagram of the display apparatus for vehicle of FIG. 2.
FIG. 4 is an internal block diagram of a display of FIG. 2.
FIGS. 5A to FIG. 5D are reference diagrams for explaining an organic light emitting diode panel of FIG. 4.
FIGS. 6A to 7E illustrate the pixel structure and operation according to an embodiment of the present disclosure.
FIGS. 8A to 8C are reference diagrams for explaining an operation of a display according to an embodiment of the present disclosure.
FIGS. 9A to 9F are reference diagrams for explaining various operations of a display according to an embodiment of the present disclosure.
FIG. 10A is an exemplary flowchart illustrating an operation of a display apparatus for vehicle according to an embodiment of the present disclosure.
FIG. 10B is another exemplary flowchart illustrating an operation of a display apparatus for vehicle according to an embodiment of the present disclosure.
FIG. 10C is yet another exemplary flowchart illustrating an operation of a display apparatus for vehicle according to an embodiment of the present disclosure.
FIGS. 11 to 12B are diagrams referenced in the description of FIGS. 10A to 10C.
FIG. 13 is an exemplary internal block diagram illustrating a display apparatus for vehicle according to an embodiment of the present disclosure.
FIGS. 14A to 14B are diagrams referenced in the description of FIG. 13.
FIG. 15 is yet another exemplary flowchart illustrating an operation of a display apparatus for vehicle according to an embodiment of the present disclosure.
FIGS. 16A to 17C are diagrams referenced in the description of FIG. 15.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

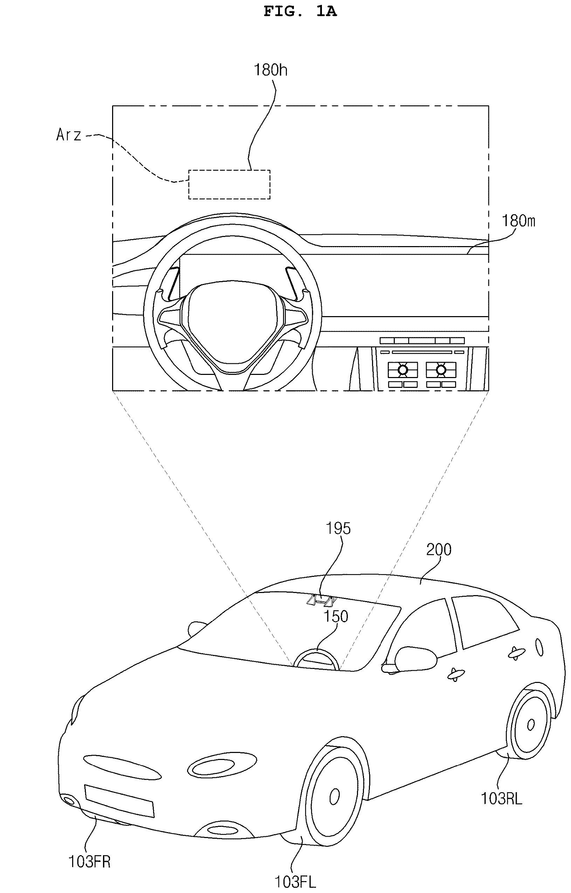

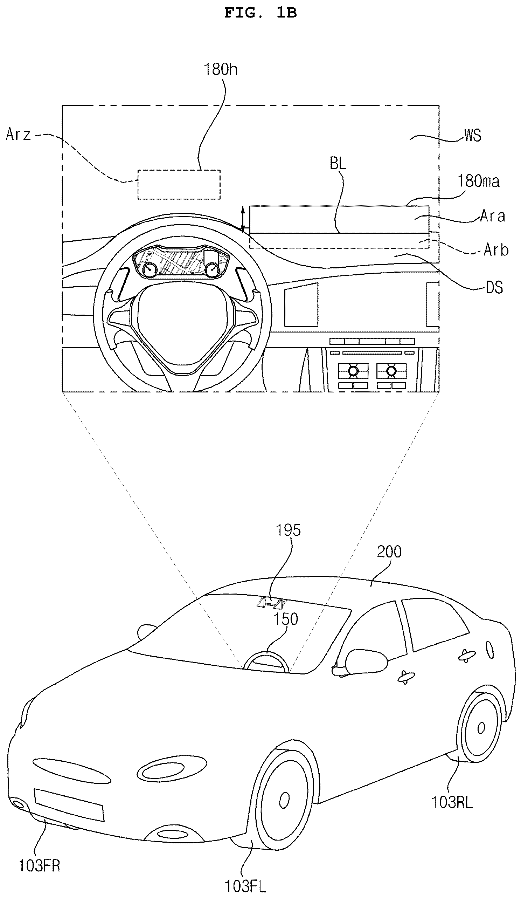

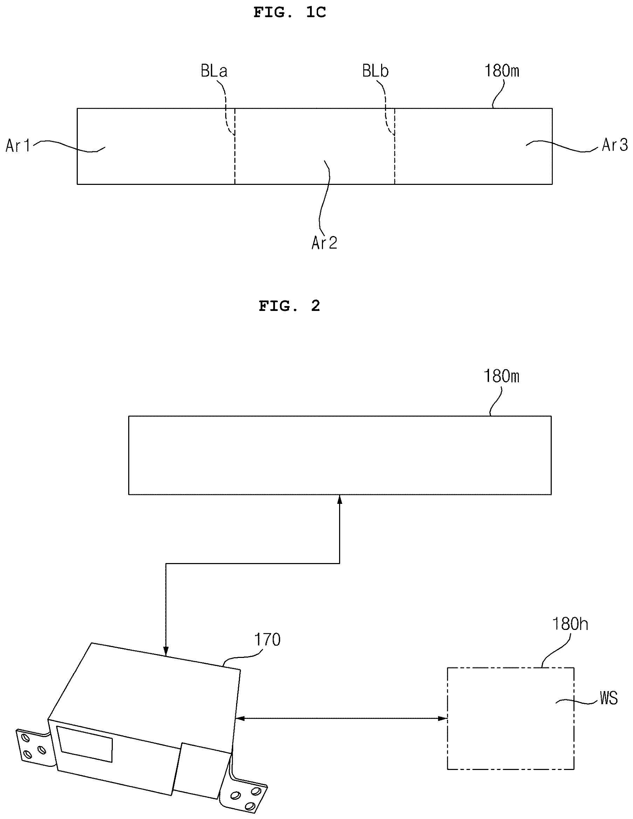

FIG. 1 illustrates an example of the exterior and interior of a vehicle.

Referring to FIG.1, a vehicle 200 may include a plurality of wheels 103FR, 103FL, 103RL,... rotated by a power source and a steering wheel 150 to adjust a traveling direction of the vehicle 200.

The vehicle 200 may further include a camera 195 to acquire an image of the front of the vehicle.

The vehicle 200 may further include therein a plurality of displays 180m and 180h to display an image, information, etc.

For example, of the plurality of displays 180m and 180h, a first display 180m may be a display including a cluster area and an information display area.

Alternatively, the first display 180m may be a display including a cluster area, an information display area, and a passenger seat (or co-driver seat) area.

A second display 180h may be a head-up display (HUD) that projects an image onto a predetermined area Arz of a windshield WS.

Meanwhile, a display apparatus 100 for vehicle or a vehicle display apparatus 100 of the present disclosure is configured such that the first display 180m of its plurality of displays 180m and 180h includes an organic light emitting diode panel.

Meanwhile, the first display 180m according to this embodiment may be a fixed type.

The first display 180m according to this embodiment is a switchable privacy display that includes an organic light emitting diode (OLED) panel 210 including a public pixel PL and a privacy pixel RL.

Meanwhile, the vehicle 200 described herein may be a concept including all of an internal combustion engine vehicle having an engine as a power source, a hybrid vehicle having an engine and an electric motor as power sources, and an electric vehicle having an electric motor as a power source.

FIG. 1B illustrates another example of the exterior and interior of a vehicle.

Referring to FIG. 1B, the vehicle 200 may include a plurality of wheels 103FR,103FL,103RL, .. rotated by a power source and a steering wheel 150 to adjust a traveling direction of the vehicle 200.

The vehicle 200 may further include therein a plurality of displays 180ma and 180h to display an image, information, etc.

A first display 180ma according to this embodiment is a switchable privacy display that includes an organic light emitting diode (OLED) panel 210 including a public pixel PL and a privacy pixel RL.

The first display 180ma according to this embodiment may be configured to operate in a POP up mode or a POP down mode, under the control of a motor driver 183.

For example, the first display 180ma according to this embodiment may be configured such that, in the POP down mode, only a first display area Ara thereof protrudes on a dashboard DS to display a first image on the first display area Ara, and in the POP up mode, the first display area Ara and a second display area Arb thereof protrude on the dashboard DS to display a second image on the first display area Ara and the second display area Arb.

FIG. 1C illustrates various examples of a display of FIG. 1A or FIG. 1B.

Referring to FIG. 1C, the display 180m according to an embodiment of the present disclosure may have a first area Ar1 on the left side and a second area Ar2 on the right side with respect to a first boundary BLa, and may have a third area Ar3 on the right side with respect to a second boundary BLb.

The first area Ar1 may correspond to a cluster area or a cluster display area, the second area Ar2 may correspond to an information display area or a center information display (CID) area, and the third area Ar3 may correspond to a passenger seat area or a co-driver display (CDD) area.

FIG. 2 illustrates the outer appearance of a display apparatus for vehicle according to an embodiment of the present disclosure.

The vehicle display apparatus 100 according to an embodiment of the present disclosure may include a signal processing device 170 configured to perform signal processing to display an image and information on at least one of a plurality of displays 180m and 180h.

Of the plurality of displays 180m and 180h, a first display 180m may be a cluster display for displaying a driving state and operation information, or an audio video navigation (AVN) display for displaying vehicle driving information, a navigation map, and various types of entertainment information or images.

By contrast, a second display 180h may be a HUD display for displaying vehicle driving information.

The signal processing device 170 may include therein a memory 508 and a processor 175 to control at least one of the plurality of displays 180m and 180h.

Meanwhile, the signal processing device 170 may execute first to third virtual machines (not shown) on a hypervisor (not shown) in the processor 175.

The first virtual machine (not shown), which is a server virtual machine, may control the second virtual machine (not shown) and the third virtual machine (not shown), which are guest virtual machines.

The second virtual machine may be referred to as a first guest virtual machine, and the third virtual machine may be referred to as a second guest virtual machine.

The first guest virtual machine (not shown) may be operated for the first display 180m, and the second guest virtual machine (not shown) may be operated for the second display 180h.

Meanwhile, the server virtual machine (not shown) in the processor 175 may be configured to set the memory 508 based on the hypervisor (not shown) for transmission of the same data to the first guest virtual machine (not shown) and the second guest virtual machine (not shown) . Accordingly, the first display 180m and the second display 180h in the vehicle may display the same information or the same image in a synchronized manner.

Meanwhile, the server virtual machine (not shown) in the processor 175 may receive and process wheel speed sensor data of the vehicle so as to transmit the processed wheel speed sensor data to at least one of the first guest virtual machine (not shown) and the second guest virtual machine (not shown) . Accordingly, at least one virtual machine may share the wheel speed sensor data of the vehicle.

Thus, the plurality of displays 180m and 180h may be controlled using a single signal processing device 170.

Meanwhile, one of the plurality of displays 180m and 180h may be configured to operate under a Linux-based operating system (OS), and the other may be configured to operate under a Web-based operating system (OS).

In some embodiments, the signal processing device 170 may control the plurality of displays 180m and 180h operating under different operating systems (OS) to display the same information or the same image in a synchronized manner.

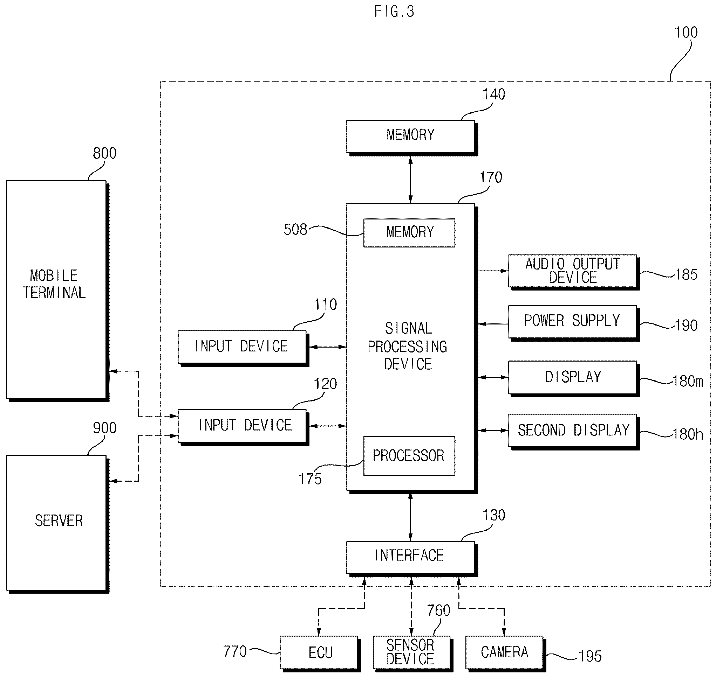

FIG. 3 illustrates an exemplary internal block diagram of a display apparatus for vehicle according to an embodiment of the present disclosure.

Referring to FIG. 3, the vehicle display apparatus 100 according to an embodiment of the present disclosure may include an input device 110, a transceiver 120, an interface 130, a memory 140, a signal processing device 170, a plurality of displays 180m and 180h, an audio output device 185, and a power supply 190.

The input device 110 may include a physical button or pad for a button input or a touch input.

The input device 110 may include a microphone (not shown) for a user voice input.

The transceiver 120 may wirelessly exchange data with a mobile terminal 800 or a server (not shown).

In particular, the transceiver 120 may wirelessly exchange data with a mobile terminal of a vehicle driver. Any of various data communication schemes, such as Bluetooth, Wi-Fi, Wi-Fi Direct, APIX, etc., may be used as a wireless data communication scheme.

The transceiver 120 may receive weather information and road traffic condition information, e.g., transport protocol expert group (TPEG) information, from the mobile terminal 800 or the server (not shown) . To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. The position module may include a GPS module to receive GPS information.

Meanwhile, the interface 130 may receive front-of-vehicle image data, side-of-vehicle image data, rear-of-vehicle image data, and obstacle-around-vehicle distance information from a camera 195 or a LiDAR (not shown), and may transmit the received information to the signal processing device 170.

The memory 140 may store various data necessary for the overall operation of the vehicle display apparatus 100, such as programs for processing or control of the signal processing device 170.

For example, the memory 140 may store data regarding a hypervisor, a server virtual machine (not shown), and a plurality of guest virtual machines executed in the processor 175.

The audio output device 185 may be configured to convert an electrical signal from the signal processing device 170 into an audio signal so as to output the audio signal. To this end, the audio output device 185 may include a speaker, etc.

The power supply 190 may supply power required to operate components under the control of the signal processing device 170. In particular, the power supply 190 may receive power from a battery in the vehicle.

An HUD display 180h, which is the second display, may include a picture generation device (not shown) to project an image, and may output an augmented reality-based object under the control of the signal processing device 170.

For example, the HUD display 180h may output vehicle speed information, vehicle traveling direction information, a front vehicle object, a distance indicator showing a distance from a vehicle ahead, and the like.

As another example, the HUD display 180h may output an augmented reality lane carpet, an augmented reality route carpet, or an augmented reality dynamic carpet corresponding to a road image.

The signal processing device 170 may control the plurality of displays 180m and 180h.

The signal processing device 170 may control the overall operation of each device or unit in the vehicle display apparatus 100.

For example, the signal processing device 170 may include a processor 175 configured to perform signal processing for the memory 508 and the display 180m.

The processor 175 may execute a hypervisor (not shown), and may execute a server virtual machine (not shown) and a plurality of guest virtual machines (not shown) on the executed hypervisor.

Here, the first guest virtual machine (not shown) may be operated for the first display 180m, and the second guest virtual machine (not shown) may be operated for the second display 180h.

Meanwhile, the signal processing device 170 may process various signals, such as an audio signal, an image signal, and a data signal. To this end, the signal processing device 170 may be implemented in the form of a system on chip (SOC).

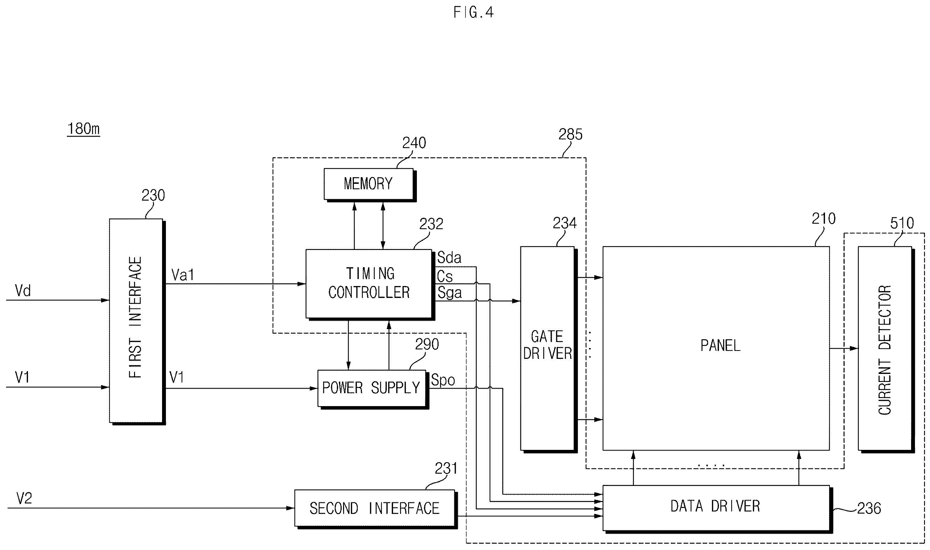

FIG. 4 is an internal block diagram of a display of FIG. 2.

Hereinafter, a description will be given based on the first display 180m.

Referring to FIG. 4, the OLED panel-based display 180m may include an organic light emitting diode (OLED) panel 210, a first interface 230, a second interface 231, a timing controller 232, a gate driver 234, a data driver 236, a memory 240, a processor 270, a power supply 290, a current detector 510, and the like.

The display 180m may receive an image signal Vd, first DC power V1, and second DC power V2, and may display a certain image based on the image signal Vd.

Meanwhile, the first interface 230 in the display 180m may receive the image signal Vd and the first DC power V1 from the signal processing device 170.

Here, the first DC power V1 may be used for the operation of the power supply 290 and the timing controller 232 in the display 180m.

The second interface 231 may receive the second DC power V2 from an external power supply 190. Meanwhile, the second DC power V2 may be input to the data driver 236 in the display 180m.

The timing controller 232 may output a data driving signal Sda and a gate driving signal Sga, based on the image signal Vd.

For example, when the first interface 230 outputs a converted image signal va1 by converting the input image signal Vd, the timing controller 232 may output the data driving signal Sda and the gate driving signal Sga based on the converted image signal va1.

The timing controller 232 may further receive a control signal, a vertical synchronization signal Vsync, etc., in addition to the image signal Vd from the signal processing device 170.

In addition to the image signal Vd, based on the control signal, the vertical synchronization signal Vsync, etc., the timing controller 232 may output a gate driving signal Sga for the operation of the gate driver 234, and a data driving signal Sda for the operation of the data driver 236.

In this case, when the panel 210 includes RGB subpixels, the data driving signal Sda may be a data driving signal for driving the RGB subpixels.

When the panel 210 includes RGBW subpixels, the data driving signal Sda may be a data driving signal for driving the RGBW subpixels.

Meanwhile, the timing controller 232 may further output a control signal Cs to the gate driver 234.

The gate driver 234 and the data driver 236 supply a scan signal and a data signal to the OLED panel 210 through a gate line GL and a data line DL, respectively, according to the gate driving signal Sga and the data driving signal Sda from the timing controller 232, thereby allowing the OLED panel 210 to display a certain image.

Meanwhile, the OLED panel 210 may include an organic light emitting layer. In order to display an image, a plurality of gate lines GL and data lines DL may be disposed in a matrix form in each pixel corresponding to the organic light emitting layer.

Meanwhile, as a scan signal is input to the gate line GL, the gate line GL may also be referred to as a scan line.

Meanwhile, the data driver 236 may output a data signal to the OLED panel 210 based on the second DC power V2 from the second interface 231.

The power supply 290 may supply various types of power to the gate driver 234, the data driver 236, the timing controller 232, etc.

The current detector 510 may detect a current flowing in a subpixel of the OLED panel 210. The detected current may be input to the processor 270 or the like, for a cumulative (or accumulated) current calculation.

Meanwhile, the timing controller 232, the gate driver 234, the data driver 236, and the memory 240 in the drawing may be configured as a single integrated circuit (IC) .

Therefore, the timing controller 232, the gate driver 234, the data driver 236, and the memory 240 may be referred to as a driving controller 285.

Meanwhile, the driving controller 285 may include a buffer (not shown) to store frame data.

In particular, the timing controller 232 in the driving controller 285 may output a gate driving signal and a data driving signal based on the frame data stored in the buffer (not shown) or the memory 240.

The timing controller 232 or the driving controller 285 may be configured to perform various types of control in the display 180m. For example, the timing controller 232 or the driving controller 285 may control the gate driver 234, the data driver 236, the timing controller 232, etc.

Meanwhile, the timing controller 232 or the driving controller 285 may receive information of the current flowing in a subpixel of the panel 210 from the current detector 510.

Then, based on the information of the current flowing in the subpixel of the panel 210, the timing controller 232 or the driving controller 285 may calculate the accumulated current of each subpixel of the panel 210. The calculated accumulated current may be stored in the memory 240.

Meanwhile, when the accumulated current of each subpixel of the panel 210 is greater than or equal to an allowable value, the timing controller 232 or the driving controller 285 may be configured to determine that it is burn-in.

For example, when the accumulated current of each subpixel of the panel 210 is greater than or equal to 300000 A, the timing controller 232 or the driving controller 285 may be configured to determine that a corresponding subpixel is a burn-in subpixel.

Meanwhile, when the accumulated current of a subpixel, among the subpixels of the panel 210, is close to an allowable value, the timing controller 232 or the driving controller 285 may be configured to determine that the corresponding subpixel is a burn-in predicted subpixel.

Meanwhile, based on the current detected by the current detector 510, the timing controller 232 or the driving controller 285 may be configured to determine that a subpixel having the greatest accumulated current is a burn-in predicted subpixel.

Meanwhile, regardless of the operation of the current detector 510, the timing controller 232 or the driving controller 285 may estimate information of the current to flow in the subpixel based on the image signal from the signal processing device 170, and may be configured to determine a subpixel predicted to experience burn-in, based on the estimated current information.

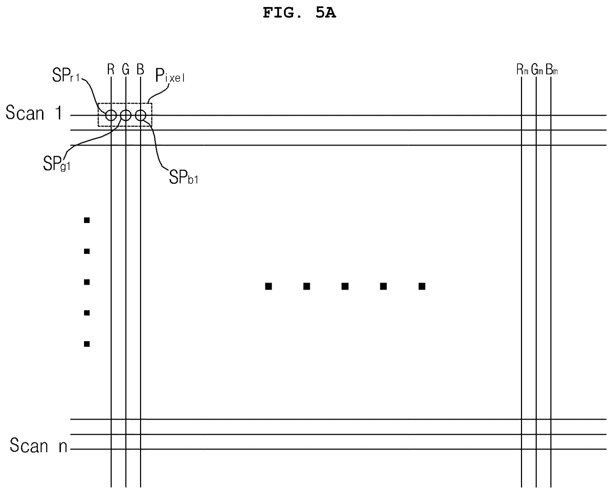

FIGS. 5A to 5D are reference diagrams for explaining an organic light emitting diode (OLED) panel of FIG. 4.

FIG. 5A illustrates an example of a pixel in the OLED panel 210.

Referring to FIG. 5A, the OLED panel 210 may include a plurality of scan lines Scan 1 to Scan n and a plurality of data lines R1, G1, B1 to Rm, Gm, Bm intersecting the scan lines.

Meanwhile, a pixel (subpixel) is defined in an area where scan lines and data lines intersect each other in the OLED panel 210. In the drawing, a pixel including RGB subpixels SR1, SG1, and SB1 is illustrated.

The RGB subpixels SR1, SG1, and SB1 are respectively provided with a red organic light emitting diode, a green organic light emitting diode, and a blue organic light emitting diode.

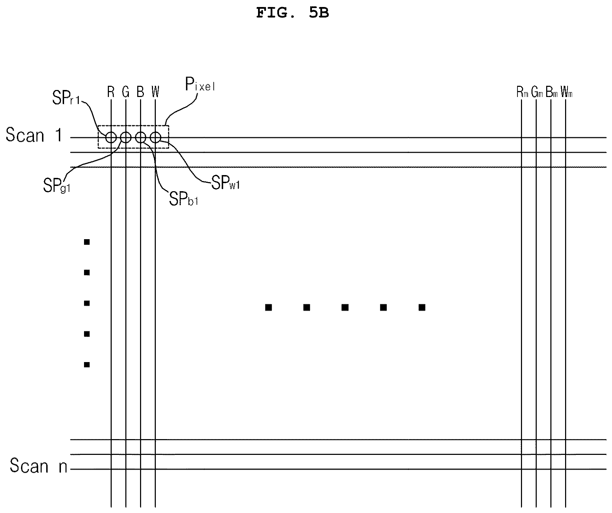

FIG. 5B illustrates another example of a pixel in the OLED panel 210.

Referring to FIG. 5B, the OLED panel 210 may include a plurality of scan lines Scan 1 to Scan n and a plurality of data lines R1, G1, B1, W1 to Rm, Gm, Bm, Wm intersecting the scan lines.

Meanwhile, a pixel (subpixel) is defined in an area where scan lines and data lines intersect each other in the OLED panel 210. In the drawing, a pixel including RGBW subpixels SR1, SG1, SB1, and SW1 is illustrated.

The RGBW subpixels SR1, SG1, SB1, and SW1 are respectively provided with a red organic light emitting diode, a green organic light emitting diode, a blue organic light emitting diode, and a white organic light emitting diode.

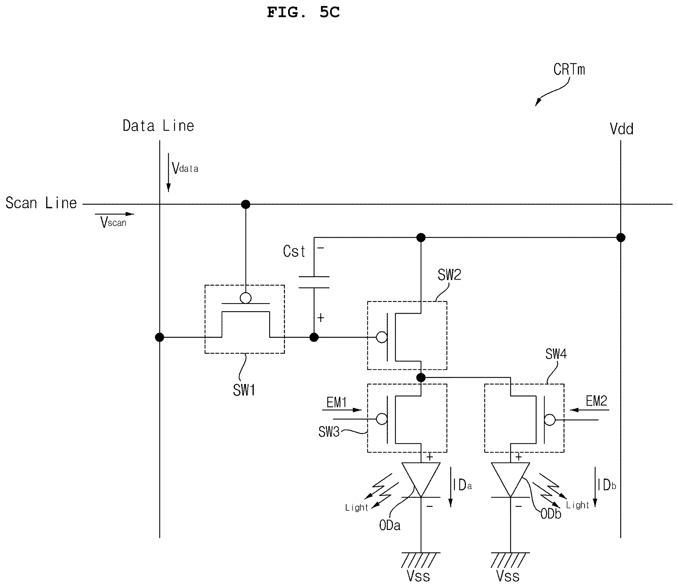

FIG. 5C illustrates an example of a circuit of a subpixel in the pixel of the OLED panel of FIG. 5A or FIG. 5B.

Referring to FIG. 5C, a subpixel circuit CRTm, which is an active type, may include a scan switching element SW1, a storage capacitor Cst, a data switching element SW2, a first drive switching element SW3, a first organic light emitting layer ODa, a second drive switching element SW4, and a second organic light emitting layer ODb.

As the scan switching element SW1 is connected at its gate terminal to a scan line, the scan switching element SW1 is turned on in response to an input scan signal Vdscan. When turned on, the scan switching element SW1 transfers an input data signal Vdata to a gate terminal of the data switching element SW2 or one end of the storage capacitor Cst.

The storage capacitor Cst is provided between the gate terminal and the source terminal of the data switching element SW2, and stores a predetermined difference between a data signal level transmitted to one end of the storage capacitor Cst and a DC voltage (VDD) level transmitted to the other end of the storage capacitor Cst.

For example, when the data signal has a different level according to a Plume Amplitude Modulation (PAM) method, the power level stored in the storage capacitor Cst varies depending on the level difference of the data signal Vdata.

As another example, when the data signal has a different pulse width according to a Pulse Width Modulation (PWM) method, the power level stored in the storage capacitor Cst varies depending on the pulse width difference of the data signal Vdata.

The data switching element SW2 is turned on according to the power level stored in the storage capacitor Cst.

The first drive switching element SW may be connected between the data switching element SW2 and the first organic light emitting layer ODa.

The second drive switching element SW4 may be connected between the data switching element SW2 and the second organic light emitting layer ODb.

The first drive switching element SW3 and the second drive switching element SW4 may be connected in parallel to each other.

Meanwhile, when the data switching element SW2 and the first drive switching element SW3 are turned on based on a public mode, a first driving current IDa proportional to the power level stored in the storage capacitor Cst flows in the first organic light emitting layer ODa. Accordingly, the first organic light emitting layer emits light.

Meanwhile, when the data switching element SW2 and the second drive switching element SW4 are turned on based on a privacy mode, a second driving current IDb proportional to the power level stored in the storage capacitor Cst flows in the second organic light emitting layer ODb. Accordingly, the second organic light emitting layer emits light.

Meanwhile, each of the first organic light emitting layer ODa and the second organic light emitting ODb may include a light emitting layer (EML) corresponding to subpixels, may include at least one of a hole injection layer (HIL), a hole transport layer (HTL), an electron transport layer (ETL), and an electron injection layer (EIL), and may further include a hole blocking layer, etc.

In the figure, a p-type MOSFET is used for the scan switching element SW1, the data switching element SW2, and the drive switching element SW3, but an n-type MOSFET or any other switching elements, such as JFET, IGBT, or SIC, may also be available.

Meanwhile, a pixel is a hold-type element that continuously emits light in the organic light emitting layer ODa, after a scan signal is applied, during a unit display period, specifically, during a unit frame period.

Meanwhile, the subpixel circuit CRTm in the drawing is driven by an active-matrix scheme.

FIG. 5D illustrates another example of a circuit of a subpixel in the pixel of the OLED panel of FIG. 5A or FIG. 5B.

Referring to FIG. 5D, an organic light emitting subpixel circuit CRTm, which is a passive type, may include a first organic light emitting diode ODa and a second organic light emitting diode ODb, without any switching element.

As shown in FIG. 5D, a data signal Vdata a may be input as an anode of the first organic light emitting diode ODa is connected to a first data line Data line a, and a scan signal Vscan may be input as a cathode of the first organic light emitting diode ODa is connected to a scan line.

The first organic light emitting diode ODa may emit light or remain non-emissive according to a plurality of subframes based on a passive-matrix scheme.

Meanwhile, a data signal Vdata b may be input as an anode of the second organic light emitting diode ODb is connected to a second data line Data line b, and a scan signal Vscan may be input as a cathode of the second organic light emitting diode ODb is connected to a scan line.

Meanwhile, the first organic light emitting diode ODa may be disposed in the public pixel PL, and the second organic light emitting diode ODb may be disposed in the privacy pixel RL.

Meanwhile, the second organic light emitting diode ODb may emit light or remain non-emissive according to a plurality of subframes based on a passive- matrix scheme.

Meanwhile, the first organic light emitting diode ODa may be disposed in the public pixel PL, and the second organic light emitting diode ODb may be disposed in the privacy pixel RL.

Meanwhile, unlike the drawing, the scan signal Vscan may be input as the anode of the first organic light emitting diode ODa and the anode of the second organic light emitting diode ODb are connected to the scan line, the cathode of the first organic light emitting diode ODa may be connected to the first data line, and the cathode of the second organic light emitting diode may be connected to the second data line.

Meanwhile, the subpixel circuit CRTm in the drawing is driven by a passive-matrix scheme.

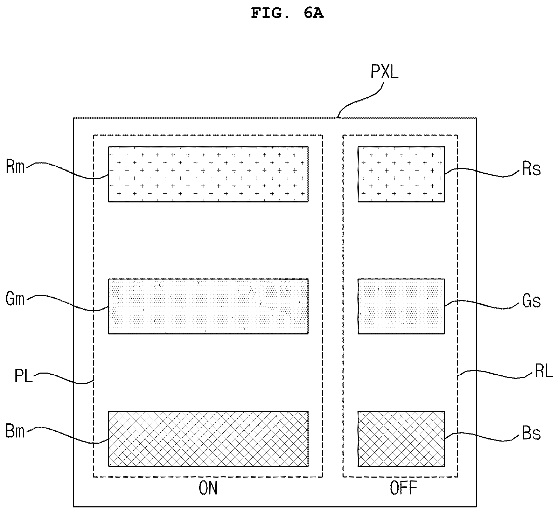

FIGS. 6A to 7E illustrates the pixel structure and operation according to an embodiment of the present disclosure.

FIG. 6A illustrates an example of the operation of a public pixel PL and a privacy pixel RL in a pixel.

Referring to FIG. 6A, a pixel PXL in the OLED panel 210 according to an embodiment of the present disclosure includes a public pixel PL and a privacy pixel RL.

The public pixel PL may include a red public pixel Rm, a green public pixel Gm, and a blue public pixel Bm.

The privacy pixel RL may include a red privacy pixel Rs, a green privacy pixel Gs, and a blue privacy pixel Bs.

The public pixel PL may be larger in size than the privacy pixel RL. This allows the public pixel and the privacy pixel of the OLED panel 210 to have different viewing angles.

The viewing angle of light emitted from the public pixel PL may be greater than the viewing angle of light emitted from the privacy pixel RL. Accordingly, the public pixel and the privacy pixel of the OLED panel 210 may have different viewing angles.

In the figure, it is illustrated that all of the red public pixel Rm, the green public pixel Gm and the blue public pixel Bm in the public pixel PL emit light, and all of the red privacy pixel Rs, the green privacy pixel Gs and the blue privacy pixel Bs in the privacy pixel RL emit light.

For example, both the first organic light emitting diode ODa and the second organic light emitting diode ODb of FIG. 5C or FIG. 5D may emit light.

Accordingly, the OLED panel 210 according to this embodiment may emit light with the widest viewing angle and luminance.

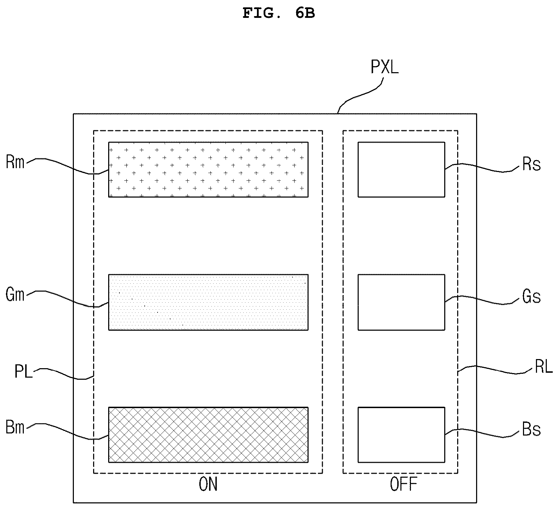

FIG. 6B illustrates another example of the operation of a public pixel PL and a privacy pixel RL in a pixel.

Referring to FIG. 6B, based on the public mode, only the public pixel PL may emit light, and the privacy pixel RL may emit no light.

In the figure, it is illustrated that, based on the public mode, all of a red public pixel Rm, a green public pixel Gm and a blue public pixel Bm in the public pixel PL emit light, while all of a red privacy pixel Rs, a green privacy pixel Gs and a blue privacy pixel Bs in the privacy pixel RL remain non-emissive.

For example, the first organic light emitting diode ODa of FIG. 5C or FIG. 5D may emit light, and the second organic light emitting diode ODb of FIG. 5C or FIG. 5D may emit no light.

Accordingly, the OLED panel 210 according to this embodiment may emit light with a first range of viewing angle and a first luminance, based on the public mode.

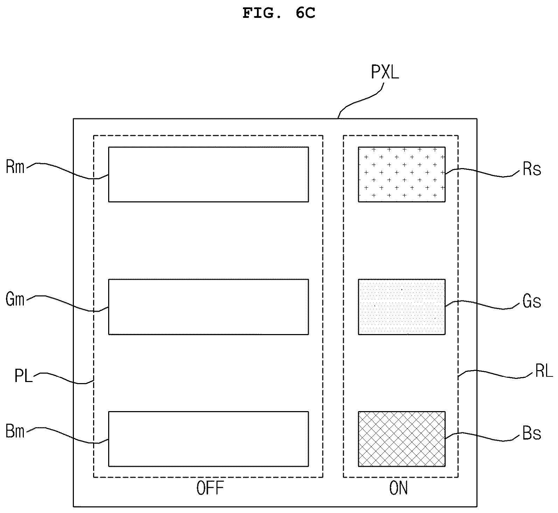

FIG. 6C illustrates yet another example of the operation of a public pixel PL and a privacy pixel RL in a pixel.

Referring to FIG. 6C, based on the privacy mode, only the privacy pixel RL may emit light, and the public pixel PL may emit no light.

In the figure, it is illustrated that, based on the privacy mode, all of a red public pixel Rm, a green public pixel Gm and a blue public pixel Bm in the public pixel PL remain non-emissive, while all of a red privacy pixel Rs, a green privacy pixel Gs and a blue privacy pixel Bs in the privacy pixel RL emit light.

For example, the first organic light emitting diode ODa of FIG. 5C or FIG. 5D may emit no light, and the second organic light emitting diode ODb of FIG. 5C or FIG. 5D may emit light.

Accordingly, the OLED panel 210 according to this embodiment may emit light with a second range of viewing angle (that is less than the first range of viewing angle) and a second luminance (that is lower than the first luminance), based on the privacy mode.

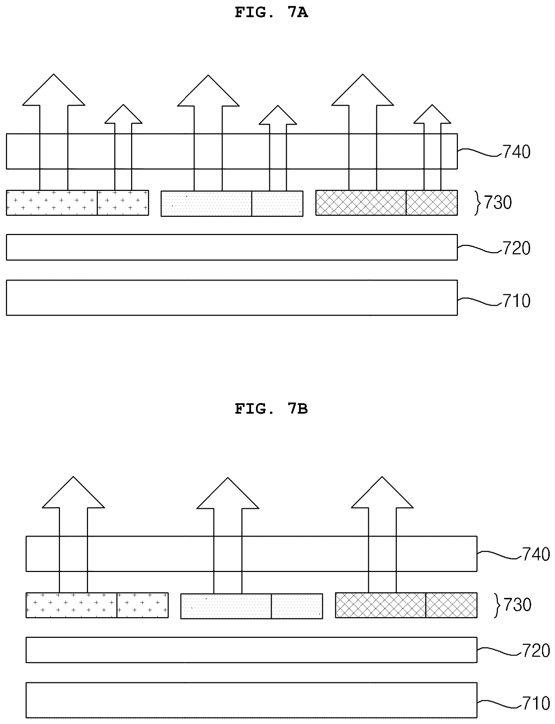

FIG. 7A illustrates that both the public pixel PL and the privacy pixel RL emit light, corresponding to FIG. 6A.

Referring to FIG. 7A, the OLED panel 210 according to an embodiment of the present disclosure may include a substrate 710, a thin-film transistor (TFT) 720 on the substrate 710, a light emitting layer 730 on the TFT 720, and glass 740 on the light emitting layer 730.

The light emitting layer 730 may include a red public light emitting layer, a green public light emitting layer and a blue public light emitting layer corresponding to the public pixel PL, and a red privacy light emitting layer, a green privacy light emitting layer and a blue privacy light emitting layer corresponding to the privacy pixel RL.

In FIG. 7A, it is illustrated that the red public light emitting layer and the red privacy light emitting layer are adjacent to each other, the green public light emitting layer and the green privacy light emitting layer are adjacent to each other, and the blue public light emitting layer and the blue privacy light emitting layer are adjacent to each other.

However, unlike FIG. 7A, the red public light emitting layer may be spaced apart from the red privacy light emitting layer, the green public light emitting layer may be spaced apart from the green privacy light emitting layer, and the blue public light emitting layer may be spaced apart from the blue privacy light emitting layer.

Meanwhile, in case in which both the public pixel PL and the privacy pixel RL emit light, all of the red public light emitting layer, the green public light emitting layer, the blue public light emitting layer, the red privacy light emitting layer, the green privacy light emitting layer, and the blue privacy light emitting layer may emit light, as shown in FIG. 7A.

FIG. 7B illustrates that only the public pixel PL emits light, corresponding to FIG. 6B.

Referring to FIG. 7B, when only the public pixel PL emits light and the privacy pixel RL emits no light, a red public light emitting layer, a green public light emitting layer, and a blue public light emitting layer may emit light, while a red privacy light emitting layer, a green privacy light emitting layer, and a blue privacy light emitting layer may remain non-emissive.

Accordingly, the OLED panel 210 may emit light with a first range of viewing angle and a first luminance.

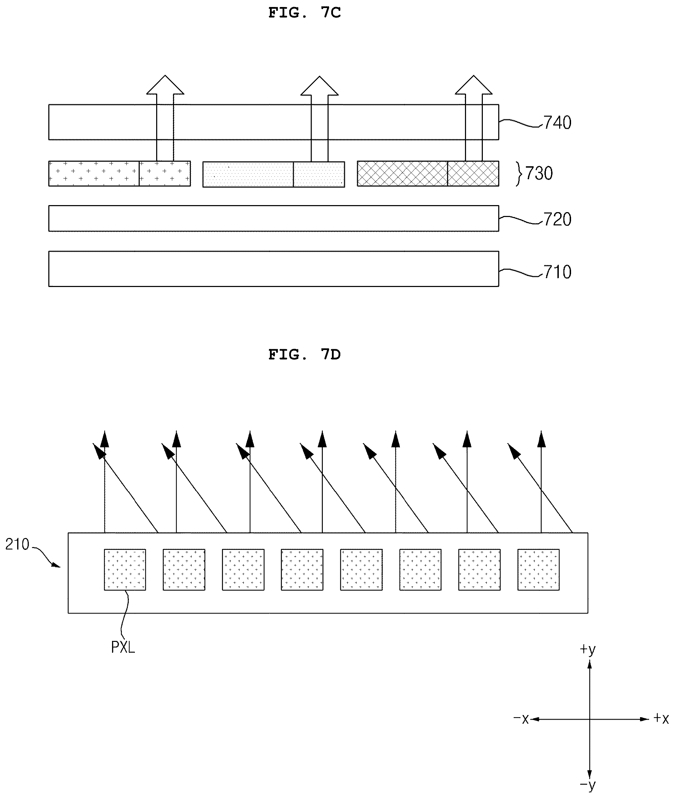

FIG. 7C illustrates that only the privacy pixel RL emits light, corresponding to FIG. 6C.

Referring to FIG. 7C, when the privacy pixel RL only emits light and the public pixel PL emits no light, a red public light emitting layer, a green public light emitting layer, and a blue public light emitting layer may remain non-emissive, while a red privacy light emitting layer, a green privacy light emitting layer, and a blue privacy light emitting layer may emit light.

Accordingly, the OLED panel 210 may emit light with a second range of viewing angle (that is less than the first range of viewing angle) and a second luminance (that is lower than the first luminance).

FIG. 7D illustrates a viewing angle in the public mode of FIG. 7B.

Referring to FIG. 7D, when the OLED panel 210 that includes a light emitting pixel PXL including a public pixel PL and a privacy pixel RL operates in the public mode, only the public pixel PL emits light and the privacy pixel RL emits no light.

Accordingly, as shown in the figure, the OLED panel 210 may emit light with the first range of viewing angle.

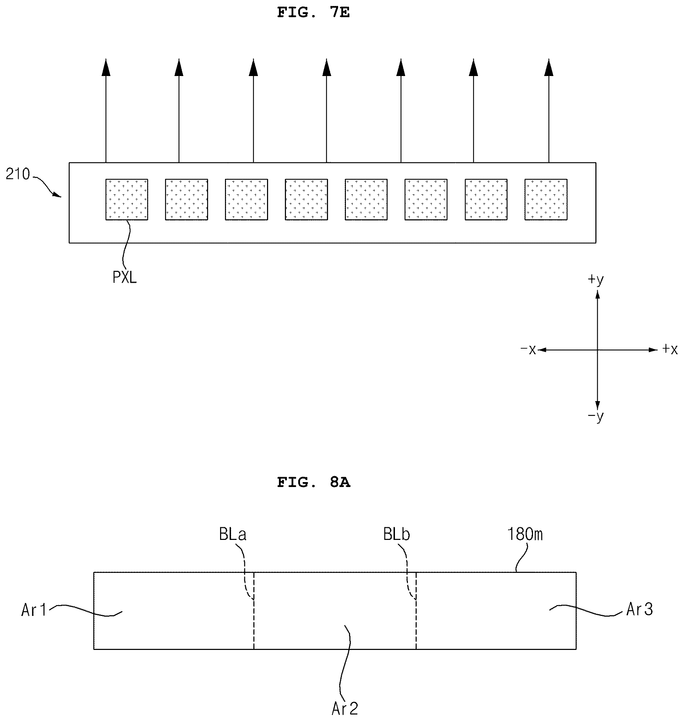

FIG. 7E illustrates a viewing angle in the privacy mode of FIG. 7C.

Referring to FIG. 7E, when the OLED panel 210 that includes a light emitting pixel PXL including a public pixel PL and a privacy pixel RL operates in the privacy mode, only the privacy pixel RL emits light and the public pixel PL emits no light.

Accordingly, as shown in the figure, the OLED panel 210 may emit light with the second range of viewing angle that is less than the first range of viewing angle.

FIGS. 8A to 8C are reference diagrams for explaining an operation of a display according to an embodiment of the present disclosure.

FIG. 8A illustrates an example of three areas of the display 180m according to an embodiment of the present disclosure.

Referring to FIG. 8A, the display 180m may be divided into a first area Ar1 on the left and a second area Ar2 on the right with respect to a first boundary BLa, and may be divided into the second area Ar2 on the left and a third area Ar3 on the right with respect to a second boundary BLb.

The first area Ar1 may correspond to a cluster area or a cluster display area, the second area Ar2 may correspond to an information display area or a center information display (CID) area, and the third area Ar3 may correspond to a passenger seat area or a co-driver display (CDD) area.

Meanwhile, the signal processing device 170 may control such that a cluster image containing vehicle speed information is displayed on the first area Ar1, a map image is displayed on the second area Ar2, and a content image is displayed on the third area Ar3.

Meanwhile, the signal processing device 170 may control such that only the first area Ar1 is turned on, while the second area Ar2 and the third area Ar3 are turned off.

Meanwhile, the signal processing device 170 may control such that only the first area Ar1 and the second area Ar2 are turned on, while the third area Ar3 is turned off.

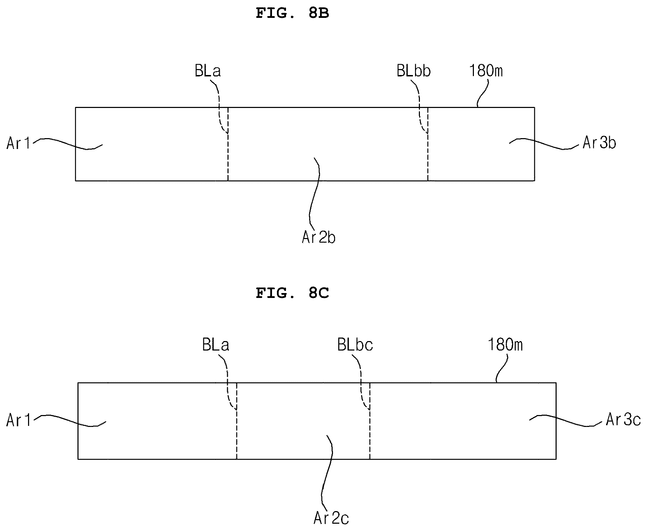

Meanwhile, the signal processing device 170 may vary (or adjust) the size of the second area Ar2 or the third area Ar3. This will be described below with reference to FIGS. 8B and 8C.

FIG. 8B illustrates another example of three areas of the display 180m according to an embodiment of the present disclosure.

Referring to FIG. 8B, while a first area Ar1 is fixed in size, the signal processing device 170 may vary the size of a second area Ar2b or a third area Ar3b.

For example, based on display content, the signal processing device 170 may change the size of the second area Ar2b or the third area Ar3b.

As shown in FIG. 8B, the size of the second area Ar2b is increased and the size of the third area Ar3b is reduced, compared to those of FIG. 8A.

In other words, compared to FIG. 8A, a second boundary BLbb, which is a boundary between the second area Ar2b and the third area Ar3b, may move to the right. Accordingly, it is possible to increase the amount of information displayed on the second area Ar2b.

FIG. 8C illustrates yet another example of three areas of the display 180m according to an embodiment of the present disclosure.

Referring to FIG. 8C, the signal processing device 170 may decrease the size of a second area Ar2c and increase the size of a third area Ar3c, compared to those of FIG. 8A.

Compared to FIG. 8A, a second boundary BLbc, which is a boundary between the second area Ar2c and the third area Ar3c may move to the left. Accordingly, it is possible to increase the amount of information displayed on the third area Ar3c.

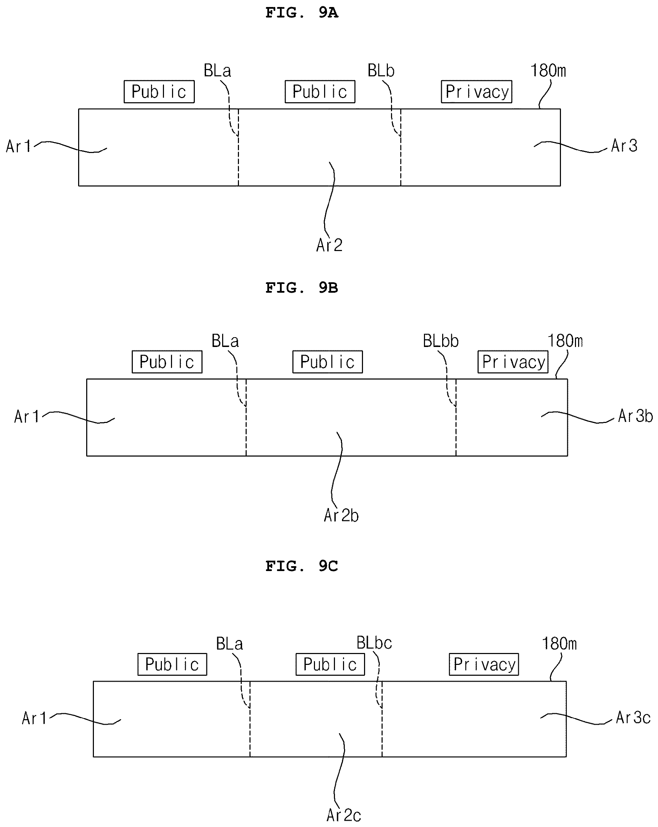

FIGS. 9A to 9F are reference diagrams for explaining various operations of a display according to an embodiment of the present disclosure.

FIG. 9A illustrates that three areas of the display 180m respectively operate as a public area and a privacy area, corresponding to FIG. 8A.

Referring to FIG. 9A, the signal processing device 170 may control such that a cluster area, which is the first area Ar1 of the display 180m, operates as the public area, an information display area, which is the second area Ar2 of the display 180m, operates as the public area, and a passenger seat area, which is the third area Ar3 of the display 180m, operates as the privacy area. This allows the display to operate as a switchable privacy display.

That is, the signal processing device 170 may control the first area Ar1 and the second area Ar2 to operate in the public mode, and may control the third area Ar3 to operate in the privacy mode.

Accordingly, only the public pixels PL, among the public pixels PL and privacy pixels RL in the first area Ar1 and the second area Ar2, emit light.

By contrast, only the privacy pixels RL, among the public pixels PL and public pixels RL in the third area Ar3, emit light.

Thus, images displayed on the first area Ar1 and the second area Ar2 are viewable from the driver's seat, and an image displayed on the third area Ar3 is not viewable from the driver's seat but is only viewable from the passenger seat.

Accordingly, the display 180m is implemented as a switchable privacy display.

FIG. 9B illustrates that three areas of the display 180m respectively operate as a public area and a privacy area, corresponding FIG. 8B.

Referring to FIG. 9B, the signal processing device 170 may control the first area Ar1 and the second area Ar2b to operate in the public mode, and may control the third area Ar3b to operate in the privacy mode.

Accordingly, only the public pixels PL among the public pixels PL and privacy pixels RL in the first area Ar1 and the second area Ar2b emit light, and only the privacy pixels RL among the public pixels PL and privacy pixels RL in the third area Ar3b emit light.

FIG. 9C illustrates that three areas of the display 180m respectively operate as a public area and a privacy area, corresponding to FIG. 8C.

Referring to FIG. 9C, the signal processing device 170 may control the first area Ar1 and the second area Ar2c to operate in the public mode, and may control the third area Ar3c to operate in the privacy mode.

Accordingly, only the public pixels PL among the public pixels PL and privacy pixels RL in the first area Ar1 and the second area Ar3b emit light, and only the privacy pixels RL among the public pixels PL and privacy pixels RL in the third area Ar3c emit light.

Meanwhile, with regard to FIGS. 9B and 9C, the signal processing device 170 may change the size of the public area or the privacy area based on an image display mode or vehicle speed. Accordingly, it is possible to display an image to correspond to the image display mode or vehicle speed.

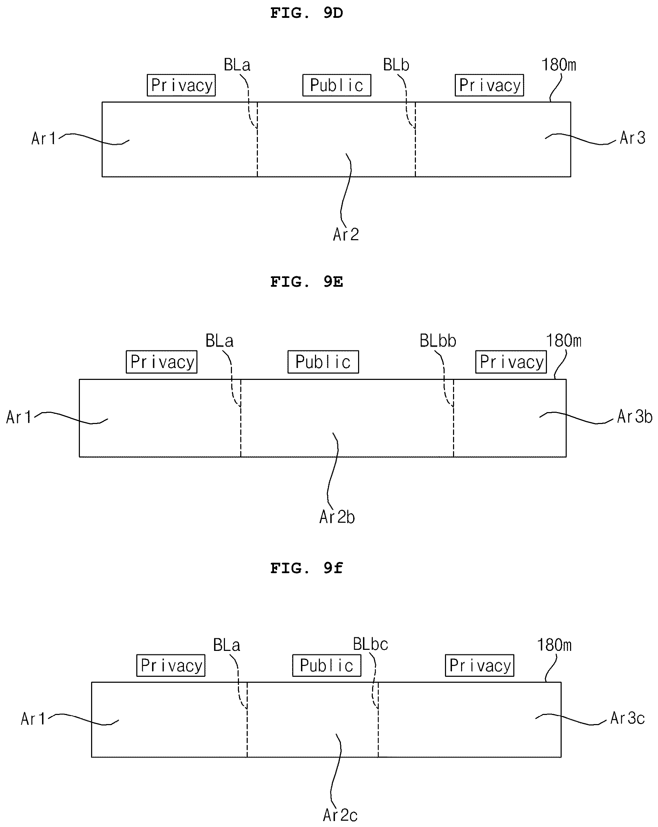

FIG. 9D illustrates that three areas in the display 180m respectively operate as a public area and a privacy area, corresponding to FIG. 8A.

Referring to FIG. 9D, the signal processing device 170 may control such that a cluster area, which is the first area Ar1 of the display 180m operates as the privacy area, an information display area, which is the second area Ar2 of the display 180m, operates as the public area, and a passenger seat area, which is the third area Ar3 of the display 180m, operates as the privacy area. This allows the display to operate as a switchable privacy display.

That is, the signal processing device 170 may control the second area Ar2 to operate in the public mode, and may control the first area Ar1 and the third area Ar3 to operate in the privacy mode.

Thus, only the public pixels PL among the public pixels PL and privacy pixels RL in the second area Ar2 emit light, and only the privacy pixels RL among the public pixels PL and privacy pixels RL in the first area Ar1 and the third area Ar3 emit light.

In other words, an image displayed on the first area Ar1 can only be viewed from the driver's seat but cannot be viewed from the passenger seat.

An image displayed on the second area Ar2 can be viewed from the driver's seat, and an image displayed on the third area Ar3 cannot be viewed from the driver's seat but can only be viewed from the passenger seat.

FIG. 9E illustrates that three areas in the display 180m respectively operate as a public area and a privacy area, corresponding to FIG. 8B.

Referring to FIG. 9B, the signal processing device 170 may control the second area Ar2b to operate in the public mode, and may control the first area Ar1 and the third area Ar3b to operate in the privacy mode.

Accordingly, only the public pixels PL among the public pixels PL and privacy pixels RL in the second area Ar2b emit light, and only the privacy pixels RL among the public pixels PL and privacy pixels RL in the first area Ar1 and the third area Ar3b emit light.

FIG. 9F illustrates that three areas in the display 180m respectively operate as a public area and a privacy area, corresponding to FIG. 8C.

Referring to FIG. 8C, the signal processing device 170 may control the second area Ar2c to operate in the public mode, and may control the first area Ar1 and the third area Ar3c to operate in the privacy mode.

Accordingly, only the public pixels PL among the public pixels PL and privacy pixels RL in the second area Ar2c emit light, and only the privacy pixels RL among the public pixels PL and privacy pixels RL in the first area Ar1 and the third area Ar3c emit light.

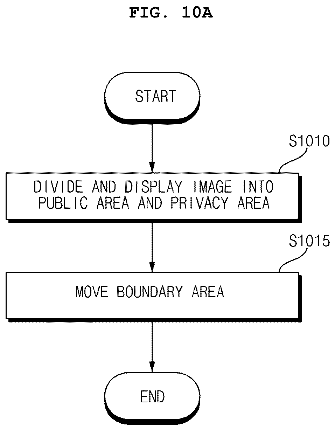

FIG. 10A illustrates an exemplary flowchart illustrating the operation of a display apparatus for vehicle according to an embodiment of the present disclosure.

Referring to FIG. 10A, the signal processing device 170 according to an embodiment of the present disclosure may control the display 180m to divide and display an image into a public area and a privacy area (S1010).

For example, as shown in FIG. 9A, the signal processing device 170 may control the first area Ar1 and the second area Ar2 to operate in the public mode, and may control the third area Ar3 to operate in the privacy mode.

In another example, as shown in FIG. 9D, the signal processing device 170 may control the second area Ar2 to operate in the public mode, and may control the first area Ar1 and the third area Ar3 to operate in the privacy mode.

Next, the signal processing device 170 may control a boundary area between the public area and the privacy area to move (S1015).

For example, as shown in FIG. 9A, when the first area Ar1 and the second area Ar2 operate in the public mode and the third area Ar3 operates in the privacy mode, degradation (or deterioration) is more likely to occur near the second boundary BLb, which is a boundary between the second area Ar2 and the third area Ar3.

Therefore, in the present disclosure, regardless of the determination of degradation or luminance difference, the boundary area or boundary is controlled to move sequentially.

For example, the signal processing device 170 according to an embodiment of the present disclosure may sequentially move the boundary area toward the public area and then move toward the privacy area.

That is, the signal processing device 170 may control the second boundary BLb between the second area Ar2 and the third area Ar3 of FIG. 9A to sequentially move toward the second area Ar2, namely, in the direction of the public area, and then move toward the third area Ar3, namely, in the direction of the privacy area.

In addition, the signal processing device 170 may be configured to repeat such a boundary or boundary area shift. Accordingly, it is possible to prevent degradation in the vicinity of the second boundary BLb.

As another example, the signal processing device 170 according to an embodiment of the present disclosure may be configured to sequentially move the boundary area toward the privacy area and then move toward the public area.

That is, the signal processing device 170 may be configured to sequentially move the second boundary BLb between the second area Ar2 and the third area Ar3 of FIG. 9A toward the third area Ar3, namely, in the direction of the privacy area, and then move toward the second area Ar2, namely, in the direction of the public area. Accordingly, it is possible to prevent degradation in the vicinity of the second boundary BLb.

Meanwhile, when the second area Ar2 operates in the public mode and the first area Ar1 operates in the privacy mode, as illustrated in FIG. 9D, degradation (or deterioration) is more likely to occur near the first boundary BLa, which is a boundary between the first area Ar1 and the second area Ar2.

Therefore, in the present disclosure, regardless of the determination of degradation or luminance difference, the boundary area or boundary is controlled to move sequentially.

That is, the signal processing device 170 may be configured to sequentially move the first boundary BLa between the first area Ar1 and the second area Ar2 of FIG. 9D toward the second area Ar2, namely, in the direction of the public area, and then move toward the first area Ar1, namely in the direction of the privacy area.

In addition, the signal processing device 170 may control such a boundary area shift to be repeated. Accordingly, it is possible to prevent degradation in the vicinity of the first boundary BLa.

As another example, the signal processing device 170 according to an embodiment of the present disclosure may be configured to sequentially move the boundary area toward the privacy area and then move toward the public area.

That is, the signal processing device 170 may be configured to sequentially move the first boundary BLa between the first area Ar1 and the second area Ar2 of FIG. 9D toward the first area Ar1, namely in the direction of the privacy area, and then move toward the second area Ar2, namely, in the direction of the public area. Accordingly, it is possible to reduce degradation of the boundary area of the OLED panel.

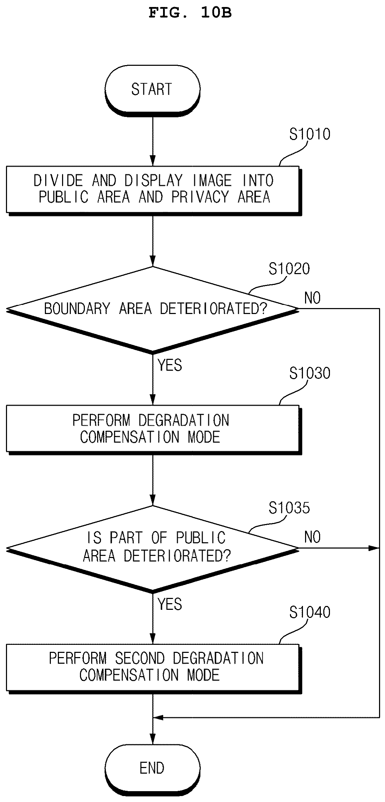

FIG. 10B is another exemplary flowchart illustrating the operation of a display apparatus for vehicle according to an embodiment of the present disclosure.

Referring to FIG. 10B, the signal processing device 170 according to an embodiment of the present disclosure may control the display 180m to divide and display an image into a public area and a privacy area (S1010).

For example, as illustrated in FIG. 9A, the signal processing device 170 may control the first area Ar1 and the second area Ar2 to operate in the public mode, and may control the third area Ar3 to operate in the privacy mode.

As another example, the signal processing device 170 may control the second area Ar2 to operate in the public mode, and may control the first area Ar1 and the third area Ar3 to operate in the privacy mode.

Next, the signal processing device 170 may be configured to determine whether degradation occurs in a boundary area between the public area and the privacy area (S1020).

For example, as shown in FIG. 9A, when the first area Ar1 and the second area Ar2 operate in the public mode and the third area Ar3 operates in the privacy mode, the signal processing device 170 may be configured to determine whether degradation occurs in the vicinity of the second boundary BLb, which is a boundary between the second area Ar2 and the third area Ar3.

In detail, as shown in FIG. 9A, when the first area Ar1 and the second area Ar2 operate in the public mode and the third area Ar3 operates in the privacy mode, the signal processing device 170 may calculate an cumulative degradation amount of a boundary area (Arma), which is a part of the second area Ar2 adjacent to the second boundary BLb, and may be configured to determine it as degradation when the cumulative degradation amount is greater than or equal to a set value.

In this case, the signal processing device 170 may calculate the cumulative degradation amount based on a cumulative luminance level of the boundary area (Arma).

Alternatively, the signal processing device 170 may calculate the cumulative degradation amount based on a cumulative luminance level of the boundary area (Arma) and temperature information.

When it is determined at step S1020 that degradation occurs in the boundary area (Arma), the signal processing device 170 may be configured to perform a degradation compensation mode (S1030).

That is, when the boundary area (Arma) between the public area based on the public pixel PL and the privacy area based on the privacy pixel RL is deteriorated, the signal processing device 170 may be configured to perform a degradation compensation mode for an area in the vicinity of the boundary area.

As one example of the degradation compensation mode, the signal processing device 170 may be configured to decrease a luminance level of the boundary area (Arma).

Specifically, as one example of the degradation compensation mode, the signal processing device 170 may control an output luminance level to be lower than an input luminance level so as to reduce the luminance level of the boundary area (Arma).

As another example of the degradation compensation mode, the signal processing device 170 may be configured to convert a part of the public area to the privacy area.

For example, the signal processing device 170 may be configured to convert the boundary area (Arma), which is a part of the public area, to the privacy area.

In other words, as the privacy area has a narrow viewing angle and lower luminance compared to the public area, degradation compensation is performed. Accordingly, it is possible to reduce degradation of the boundary area of the OLED panel 210.

As such, when the boundary area between the public area based on the public pixel PL and the privacy area based on the privacy pixel RL is deteriorated, the signal processing device 170 according to an embodiment of the present disclosure is configured to convert a part of the public area to the privacy area. Accordingly, it is possible to reduce degradation of the boundary area of the OLED panel 210.

Meanwhile, when the boundary area is deteriorated, the signal processing device 170 may be configured to sequentially increase the area converted from the public area to the privacy area. Accordingly, it is possible to reduce degradation of the boundary area of the OLED panel 210.

Meanwhile, based on a cumulative degradation amount of the boundary display area, the signal processing device 170 may change the size of the area converted from the public area to the privacy area.

For example, as the cumulative degradation amount of the boundary display area increases, the signal processing device 170 may be configured to increase the size of the area converted from the public area to the privacy area. Accordingly, it is possible to reduce degradation of the boundary area of the OLED panel 210.

Next, the signal processing device 170 may be configured to determine whether degradation occurs in the public area (S1035), instead of the boundary area between the public area and the privacy area.

For example, the signal processing device 170 may be configured to determine whether degradation occurs in the first area Ar1 operating as the public area.

As another example, the signal processing device 170 may be configured to determine whether degradation occurs in the second area Ar2 operating as the public area.

When degradation occurs in the public area, namely, in the first area Ar1 or the second area Ar2, the signal processing device 170 may be configured to perform a second degradation compensation mode (S1040).

That is, when a second part of the public area is deteriorated, the signal processing device 170 may be configured to perform the second degradation compensation mode.

For example, upon performing the second degradation compensation mode, the signal processing device 170 may change the luminance of the second part.

Specifically, upon performing the second degradation compensation mode, the signal processing device 170 may be configured to decrease the luminance of the second part.

In this case, a luminance level for luminance compensation in the second degradation compensation mode may be greater than the luminance level for luminance compensation in the degradation compensation mode at step S1030.

In other words, upon performing the second degradation compensation mode, the signal processing device 170 may be configured to control the amount of degradation compensation to be lower than the amount of degradation compensation at step S1030.

For example, as degradation is more pronounced in the boundary area, it is preferable for the amount of compensation performed in the second degradation compensation mode to be smaller. Accordingly, it is possible to reduce degradation of the second part in the public area.

Meanwhile, upon performing the second degradation compensation mode, the signal processing device 170 may be configured to convert the second part to the privacy area. Accordingly, it is possible to reduce degradation of the second part in the public area.

Meanwhile, upon performing the second degradation compensation mode, the signal processing device 170 may be configured to control the size of the second part converted to the privacy area to be less than the size of the boundary area converted to the privacy area for the degradation compensation at step S1030. Accordingly, it is possible to reduce degradation of the second part in the public area.

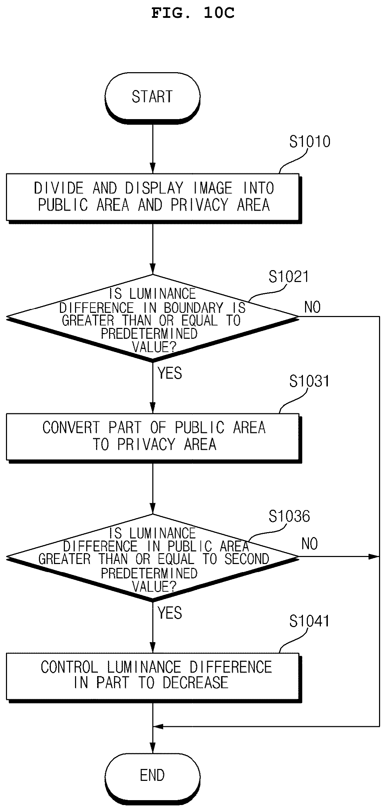

FIG. 10C is yet another exemplary flowchart illustrating the operation of a display apparatus for vehicle according to an embodiment of the present disclosure.

Referring to FIG. 10C, the signal processing device 170 according to an embodiment of the present disclosure may control the display 180m to divide and display an image into a public area and a privacy area (S1010).

For example, as shown in FIG. 9A, the signal processing device 170 may be configured to control the first area Ar1 and the second area Ar2 to operate in the public mode, and may be configured to control the third area Ar3 to operate in the privacy mode.

Next, the signal processing device 170 may be configured to determine whether a luminance difference between the public area and the privacy area is greater than or equal to a predetermined value (S1021).

For example, when the first area Ar1 and the second area Ar2 operate in the public mode and the third area Ar3 operates in the privacy mode, as illustrated in FIG. 9A, the signal processing device 170 may be configured to determine whether a luminance difference in the vicinity of the second boundary BLb between the second area Ar2 and the third area Ar3 is greater than or equal to a predetermined value.

In detail, as illustrated in FIG. 9A, when the first area Ar1 and the second area Ar2 operate in the public mode and the third area Ar3 operates in the privacy mode, the signal processing device 170 may be configured to determine whether a difference between luminance of a boundary area (Arma), which is a part of the second area Ar2 adjacent to the second boundary BLb, and luminance of a part of the third area Ar3 adjacent to the second boundary BLb is greater than or equal to the predetermined value.

For example, the signal processing device 170 may be configured to determine whether a luminance level of the boundary area (Arma), which is a part of the second area Ar2 adjacent to the second boundary BLb, is higher, and a luminance difference in the vicinity of the second boundary BLb is greater than or equal to the predetermined value.

When it is determined at step S1021 that the luminance difference between the public area and the privacy area is greater than or equal to the predetermined value, the signal processing device 170 may be configured to convert a part of the public area to the privacy area (S1031).

For example, the signal processing device 170 may be configured to convert the boundary area (Arma), which is a part of the public area, to the privacy area.

In other words, as the privacy area has a narrower viewing angle and lower luminance compared to the public area, it is possible to reduce the luminance difference in the boundary area of the OLED panel 210.

Meanwhile, when the luminance difference between the public area and the privacy area is greater than or equal to the predetermined value, the signal processing device 170 may be configured to sequentially increase an area converted from the public area to the privacy area. Accordingly, it is possible to reduce the luminance difference in the boundary area of the OLED panel 210.

Meanwhile, based on a luminance level difference between the public area and the privacy area, the signal processing device 170 may change (or adjust) the size of the area converted from the public area to the privacy area.

For example, as the luminance difference between the public area and the privacy area increases, the signal processing device 170 may be configured to increase the size of the area converted from the public area to the privacy area. Accordingly, it is possible to effectively reduce the luminance difference in the boundary area of the OLED panel 210.

Next, instead of the boundary area between the public area and the privacy area, the signal processing device 170 may be configured to determine whether a luminance difference in a part of the public area is greater than or equal to a second predetermined value (S1035).

For example, the signal processing 170 may be configured to determine whether a luminance difference in a part of the first area Ar1 operating as the public area is greater than or equal to the second predetermined value.

As another example, the signal processing 170 may be configured to determine whether a luminance difference in a part of the second area Ar2 operating as the public area is greater than or equal to the second predetermined value.

Meanwhile, when the luminance difference in the part of the first area Ar1 or the second area Ar2, which is the public area, is greater than or equal to the second predetermined value, the signal processing device 170 may be configured to decrease the luminance difference in the corresponding part (S1040).

For example, when the luminance difference in the part of the first area Ar1 or the second area Ar2 is greater than or equal to the second predetermined value, the signal processing device 170 may be configured to decrease a first luminance level to a second luminance level and may be configured to decrease a third first luminance level to a fourth luminance level, such that a difference between the first luminance level and the third luminance level is reduced to a difference between the second luminance level and the fourth luminance level, thereby reducing the luminance difference in the corresponding area.

Meanwhile, when the luminance difference in the part of the first area Ar1 or the second area Ar2 is greater than or equal to the second predetermined value, instead of reducing the luminance difference in the corresponding part, the signal processing device 170 may be configured to convert a part of the public area to the privacy area. Accordingly, it is possible to reduce the luminance difference in the second part of the public area.

Therefore, considering FIGS.10B and 10C collectively, when a boundary area between the public area based on the public pixel PL and the privacy area based on the privacy pixel RL is deteriorated or a luminance difference between the public area and the privacy area is greater than or equal to a predetermined value, the signal processing device 170 is configured to convert a part of the public area to the privacy area. Accordingly, it is possible to reduce degradation or luminance difference in the boundary area of the OLED panel 210.

Meanwhile, when a boundary area between the second area Ar2 corresponding to the public area and the third area Ar3 corresponding to the privacy area is deteriorated or a luminance difference between the second area Ar2 and the third area Ar3 is greater than or equal to a predetermined value, the signal processing device 170 may be configured to convert a part (or portion) of the second area Ar2 corresponding to the public area to the privacy area. Accordingly, it is possible to reduce degradation or luminance difference in the boundary area of the OLED panel 210.

Meanwhile, when a boundary area between the first area Ar1 corresponding to the privacy area and the second area Ar2 corresponding to the public area is deteriorated or a luminance difference between the first area Ar2 and the second area Ar2 is greater than or equal to a predetermined value, the signal processing device 170 may be configured to convert a part (or portion) the second area Ar2 corresponding to the public area to the privacy area. Accordingly, it is possible to reduce degradation or luminance difference in the boundary area of the OLED panel 210.

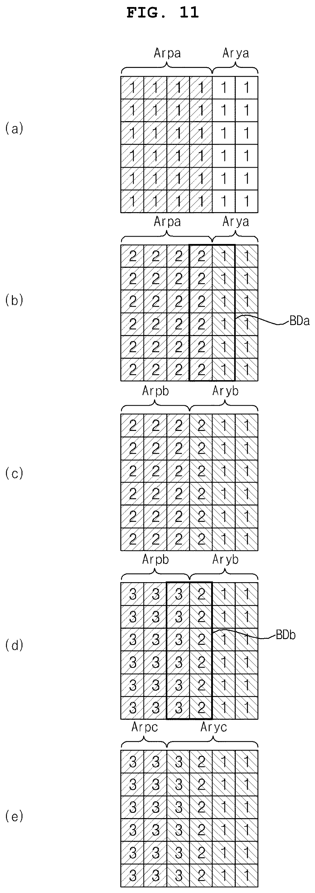

FIGS. 11 to 12B are diagrams referenced in the description of FIGS. 10A to 10C.

FIG. 11 illustrates an example of a transition from the public area to the privacy area.

Referring to the figure, (a) of FIG. 11 illustrates a public area Arpa of four columns and a privacy area Arya of two columns.

When the amount of degradation of the public area Arpa is '1', and the amount of degradation of the privacy area Arya is '1', the signal processing device 170 may not perform any degradation compensation mode.

(b) of FIG. 11 illustrates that the amount of degradation of the public area Arpa is '2' as the degradation of the public area Arpa of four columns progresses, and the amount of degradation of the privacy area Arya is '1'.

In this case, as a difference between the amount of degradation of the public area Arpa and the amount of degradation of the privacy area Arya is '1', the signal processing device 170 may be configured to perform a degradation compensation mode for a first boundary area BDa.

For example, for the degradation compensation mode, the signal processing device 170 may be configured to convert a part of the public area Arpa to the privacy area.

That is, as shown in (c) of FIG. 11, the signal processing device 170 may be configured to control the public area Arpa of four columns and the privacy area Aryb of two columns to be the public area Arpb of three columns and the privacy area Aryb of three columns.

(d) of FIG. 11 illustrates that the amount of degradation of the public area Arpb is '3' as the degradation of the public area Arpb of three columns further progresses, and a part of the privacy area Aryb has the amount of degradation of '2' and the remaining part of the privacy area Aryb has the amount of degradation of '1'.

In this case, as a difference between the amount of degradation of the public area Arpb and the amount of degradation of the privacy area Aryb is '1', the signal processing device 170 may be configured to perform a degradation compensation mode for a second boundary area BDb.

For example, for the degradation compensation mode, the signal processing device 170 may be configured to convert a part of the public area Arpa to the privacy area.

That is, as shown in (e) of FIG. 11, the signal processing device 170 may be configured to control the public area Arpb of three columns and the privacy area Aryb of three columns to be the public area Arpc of two columns and the privacy area Aryc of four columns.

As such, when the boundary area is deteriorated, the signal processing device 170 may be configured to sequentially increase the area converted from the public area to the privacy area. Accordingly, it is possible to reduce degradation of the boundary area of the OLED panel 210.

In FIG. 11, it is illustrated that the boundary between the public area and the privacy area sequentially moves to the left, namely, in the direction of the public area, corresponding to the operation method of FIG. 10A, but the present disclosure is not limited thereto.

That is, the signal processing device 170 may control the boundary between the public area and the privacy area to sequentially move to the left, namely, in the direction of the public area, and then move to the right, namely, in the direction of the privacy area. Accordingly, it is possible to reduce degradation of the boundary area of the OLED panel.

Alternatively, unlike FIG. 11, the signal processing device 170 may be configured to move the boundary between the public area and the privacy area to the right, namely, in the direction of the privacy area, and then move to the left, namely, in the direction of the public area. Accordingly, it is possible to reduce degradation of the boundary area of the OLED panel.

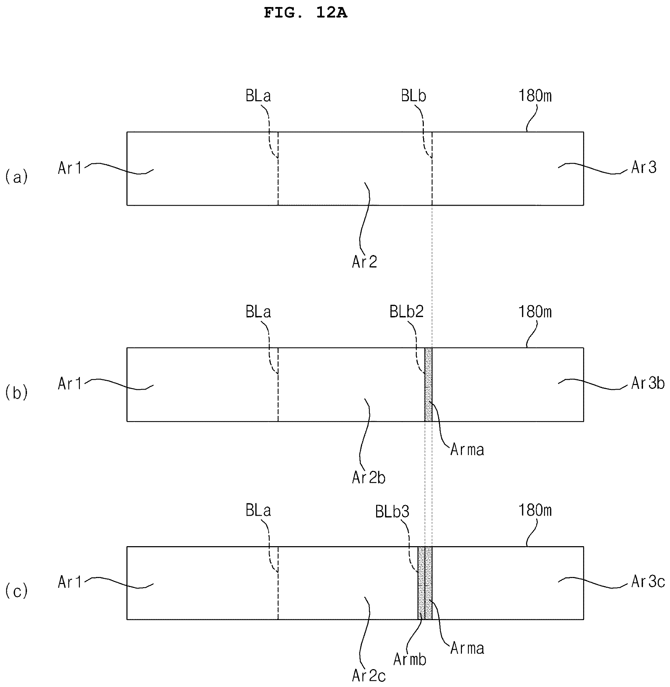

FIG. 12A illustrates degradation of a boundary area between a second area (Ar2) corresponding to the public area and a third area (Ar3) corresponding to the privacy area.

(a) of FIG. 12A illustrates a first area Ar1, a second area Ar2, and a third area Ar3 in the display 180m.

Here, the first area Ar1 and the second area Ar2 may be the public area, and the third area Ar3 may be the privacy area.

When a boundary area Arma between the second area Ar2 corresponding to the public area and the third area Ar3c corresponding to the privacy area is deteriorated, the signal processing device 170 may be configured to convert a part Arma of the second area Ar2, which is the public area, to the privacy area, as shown in (b) of FIG. 12A.

Accordingly, the boundary between the public area and the privacy area is changed to BLb2, which is further to the left relative to BLb.

Meanwhile, when the boundary area is deteriorated, the signal processing device 170 may be configured to sequentially increase the area converted from the public area to the privacy area.

That is, in addition to the part Arma of the second area Ar2, the signal processing device 170 may be configured to convert another part Armb of the second area Ar2 to the privacy area, as shown in (c) of FIG. 12A.

Accordingly, the boundary between the public area and the privacy area is changed to BLb3, which is further to the left relative to BLb2.

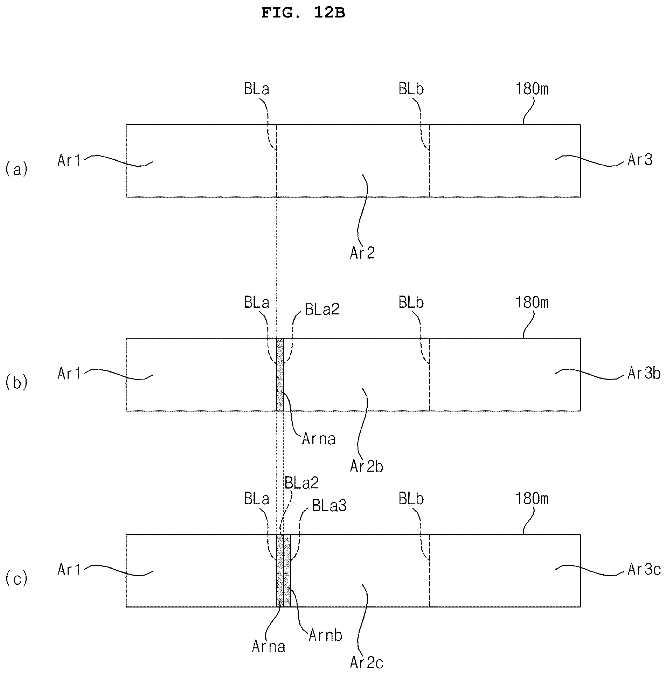

FIG. 12B illustrates degradation of a boundary area between a second area (Ar2) corresponding to the public area and a first area (Ar1) corresponding to the privacy area.

(a) of FIG. 12B illustrates a first area Ar1, a second area Ar2, and a third area Ar3 in the display 180m.

Here, the second area Ar2 may be the public area, and the first area Ar1 and the third area Ar3 may be the privacy area.

When a boundary area Arna between the second area Ar2 corresponding to the public area and the first area Ar1 corresponding to the privacy area is deteriorated, the signal processing device 170 may be configured to convert a part Arna of the second area Ar2, which is the public area, to the privacy area, as shown in (b) of FIG. 12B.

Accordingly, the boundary between the public area and the privacy area is changed to BLa2, which is further to the right relative to BLa.

Meanwhile, when the boundary area is deteriorated, the signal processing device 170 may be configured to sequentially increase the area converted from the public area to the privacy area.

That is, in addition to the part Arna of the second area Ar2, the signal processing device 170 may be configured to convert another part Arnb of the second area to the privacy area, as shown in (c) of FIG. 12B.

Accordingly, the boundary between the public area and the privacy area is changed to BLa3, which is further to the right relative to BLa2.

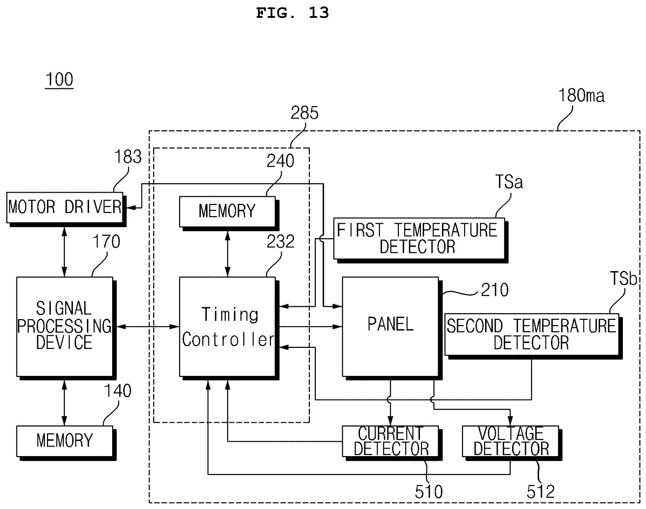

FIG. 13 illustrates an exemplary internal block diagram of a display apparatus for vehicle according to an embodiment of the present disclosure.

Referring to FIG. 13, the vehicle display apparatus 100 according to an embodiment of the present disclosure includes a display 180ma, a signal processing device 170, a memory 140, and a motor driver 183.

The motor driver 183 may be configured to adjust a height of an organic light emitting diode (OLED) panel 210.

For example, when the OLED panel 210 is in the POP up mode, the motor driver 183 may be configured to control the height of the OLED panel 210 to be a first height hb.

As another example, when the OLED panel 210 is in the POP down mode, the motor driver 183 may be configured to control the height of the OLED panel 210 to be a second height ha less than the first height hb.

Meanwhile, the display 180ma in the vehicle display apparatus 100 according to this embodiment includes the OLED panel 210 and a driving controller 285 configured to output a driving signal to the OLED panel 210.

The display 180ma in the vehicle display apparatus 100 according to this embodiment may further include a first temperature detector TSa disposed in a first area of the rear surface of the OLED panel 210, and a second temperature detector TSb disposed in a second area of the rear surface of the OLED panel 210.

The display 180ma in the vehicle display apparatus 100 according to this embodiment may further include a current detector 501 configured to detect a current flowing through the OLED panel 210, and a voltage detector 512 configured to detect an OLED voltage of the OLED panel 210.

The driving controller 285 may include a memory 240 and a timing controller 232 configured to output a driving signal to the OLED panel 210.

The driving controller 285 may be configured to transmit first detected temperature information from the first temperature detector TSa and second detected temperature information from the second temperature detector TSb to the signal processing device 170.

The driving controller 285 may transmit current information from the current detector 510 and voltage information from the voltage detector 512 to the signal processing device 170.

Meanwhile, the signal processing device 170 or the driving controller 285 may be configured to perform a first degradation compensation mode or a second degradation compensation mode according to the temperature difference between a first detected temperature by the first temperature detector TSa disposed in a first display area Ara of the rear surface of the OLED panel 210 and a second detected temperature by the second temperature detector TSb disposed in a second display area Arb of the rear surface of the OLED panel 210.

Meanwhile, the signal processing device 170 or the driving controller 285 may be configured to control a luminance compensation value in the second degradation compensation mode to be greater than a luminance compensation value in the first luminance compensation mode. Accordingly, it is possible to reduce degradation in an adaptive manner based on the temperature of each area of the panel.

Meanwhile, in the second degradation compensation mode, the signal processing device 170 or the driving controller 285 may be configured to control a luminance compensation value of the first display area Ara to be different from a luminance compensation value of the second display area Arb. Accordingly, it is possible to reduce degradation in an adaptive manner based on the temperature of each area of the panel.

Meanwhile, the signal processing device 170 or the driving controller 285 may be configured to perform the first degradation compensation mode in case in which the temperature difference between the first detected temperature by the first temperature detector TSa and the second detected temperature by the second temperature detector TSb is less than a reference value, and may be configured to perform the second degradation compensation mode in case in which the temperature difference is greater than or equal to the reference value. Accordingly, it is possible to reduce degradation in an adaptive manner based on the temperature of each area of the panel.

Meanwhile, the signal processing device 170 or the driving controller 285 may be configured to perform the second degradation compensation mode in case in which the temperature difference between the first detected temperature and the second detected temperature is greater than or equal to a reference value, and may be configured to control, in the second degradation compensation mode, a luminance compensation value of the second display area Arb to be greater than a luminance compensation value of the first display area Ara. Accordingly, it is possible to reduce degradation in an adaptive manner based on the temperature of each area of the panel.

Meanwhile, when a cumulative degradation amount of the first display area Ara is greater than a cumulative degradation amount of the second display area Arb, the signal processing device 170 or the driving controller 285 may be configured to perform the second degradation compensation mode in case in which the temperature difference between the first detected temperature and the second detected temperature is greater than or equal to a reference value and the second detected temperature is greater than the first detected temperature, and may be configured to control, in the second degradation compensation mode, a luminance compensation value of the second display area Arb to be greater than a luminance compensation value of the first display area Ara. Accordingly, it is possible to reduce degradation in an adaptive manner based on the temperature of each area of the panel.

Meanwhile, the signal processing device 170 or the driving controller 285 may be configured to perform the second degradation compensation mode in case in which the temperature difference between the first detected temperature and the second detected temperature is greater than or equal to a reference value and the first temperature is greater than the second temperature, and may be configured to control, in the second degradation compensation mode, a luminance compensation value of the first display area Ara to be greater than a luminance compensation value of the second display area Arb. Accordingly, it is possible to reduce degradation in an adaptive manner based on the temperature of each area of the panel.

Meanwhile, when performing the first degradation compensation mode, the signal processing device 170 or the driving controller 285 may be configured to control a luminance compensation value of the first display area Ara to be greater than a luminance compensation value of the second display area Arb in case in which a cumulative degradation amount of the first area Ara is greater than a cumulative degradation amount of the second area Arb. When performing the first degradation compensation mode, the signal processing device 170 or the driving controller 285 may be configured to control a luminance compensation value of the second display area Arb to be greater than a luminance compensation value of the first display area Ara in case in which a cumulative degradation amount of the second display area Arb is greater than a cumulative degradation amount of the first display area Ara. Accordingly, it is possible to reduce degradation in an adaptive manner based on the temperature of each area of the panel.

Meanwhile, upon performing the first degradation compensation mode or the second degradation compensation mode, the signal processing device 170 or the driving controller 285 may be configured to perform a pixel shift, a first direction line shift, or a second direction line shift. Accordingly, it is possible to reduce degradation.

Meanwhile, when performing the first degradation compensation mode or the second degradation compensation mode, the signal processing device 170 or the driving controller 285 may be configured to perform luminance gradation processing in a third area including a boundary BL between the first display area Ara and the second display area Arb. Accordingly, it is possible to increase visibility of the boundary BL area between the first display area Ara and the second display area Arb.

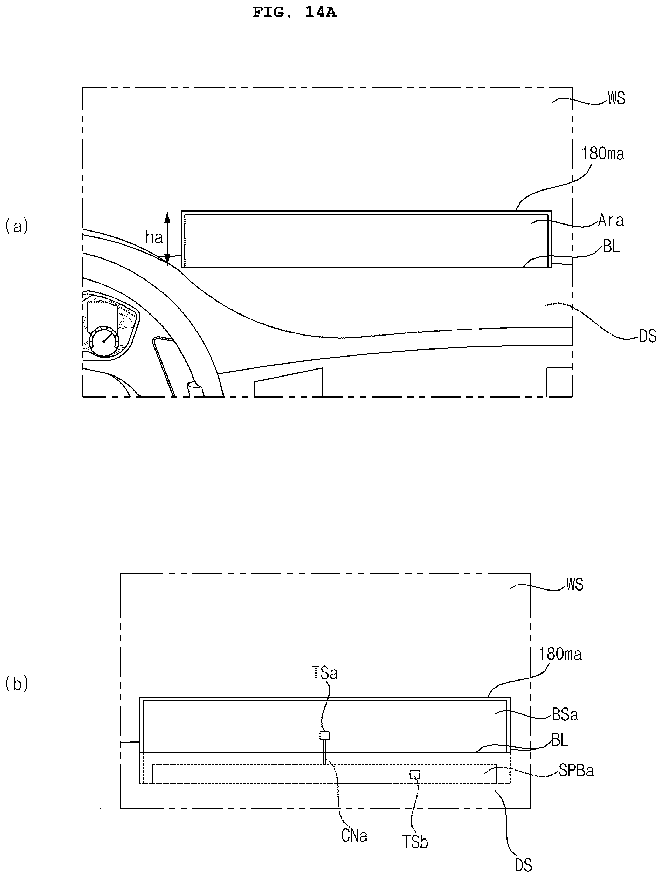

FIGS. 14A to 14B are diagrams referenced in the description of FIG. 13.

FIG. 14A illustrates the front and rear of a display in a POP down mode, according to an embodiment of the present disclosure.

Referring to the figure, by the operation of the motor driver 183, the display 180ma according to an embodiment of the present disclosure may be configured to operate in the POP down mode in which only a first display area Ara protrudes on a dashboard DS, as shown in (a) of FIG. 14A.

The display 180ma may have a height ha in the POP down mode.

In this case, a boundary BL between the first display area Ara and the second display area Arb may be located at the height of the dashboard DS.

Meanwhile, as shown in (b) of FIG. 14A, the first temperature detector TSa and the second temperature detector TSa may be disposed at the rear surface of the display 180ma or the rear surface of the OLED panel 210.

The first temperature detector TSa may be disposed in the first display area Ara of the rear surface of the display 180 or the rear surface of the OLED panel 210, and the second temperature detector TSb may be disposed in the second area Arb of the rear surface of the display 180 or the rear surface of the OLED panel 210.

Meanwhile, a circuit board SPBa for the placement of the driving controller 285 and the like may be disposed at a lower portion of the rear surface of the display 180 or the rear surface of the of the OLED panel 210, and the second temperature detector TSb may be disposed on the circuit board SPBa.

Meanwhile, the first temperature detector TSa may be spaced apart from the circuit board SPBa to be disposed above the circuit board SPBa, and a conductive line CNa may be disposed between the circuit board SPBa and the first temperature detector TSa to connect the first temperature detector TSa to the circuit board SPBa.

Meanwhile, the first temperature detector TSa may be disposed at a middle portion of the first area Ara, and the second temperature detector TSb may be disposed at a right portion of the second area Arb instead of a middle portion thereof.

Meanwhile, in the POP down mode, the circuit board SPBa and the second temperature detector TSb may be disposed under the dashboard DS, and accordingly, the circuit board SPBa and the second temperature detector TSb may not be exposed to the outside.

In the POP down mode, as the circuit board SPBa, the second temperature detector TSb, and the like are disposed under the dashboard DS and thus are not exposed to the outside, heat exchange is not easily achieved compared to the first temperature detector TSa that is disposed above the dashboard DS, causing the temperature of the circuit board SPBa and the second temperature detector TSb to be higher than the temperature of the first temperature detector TSa.

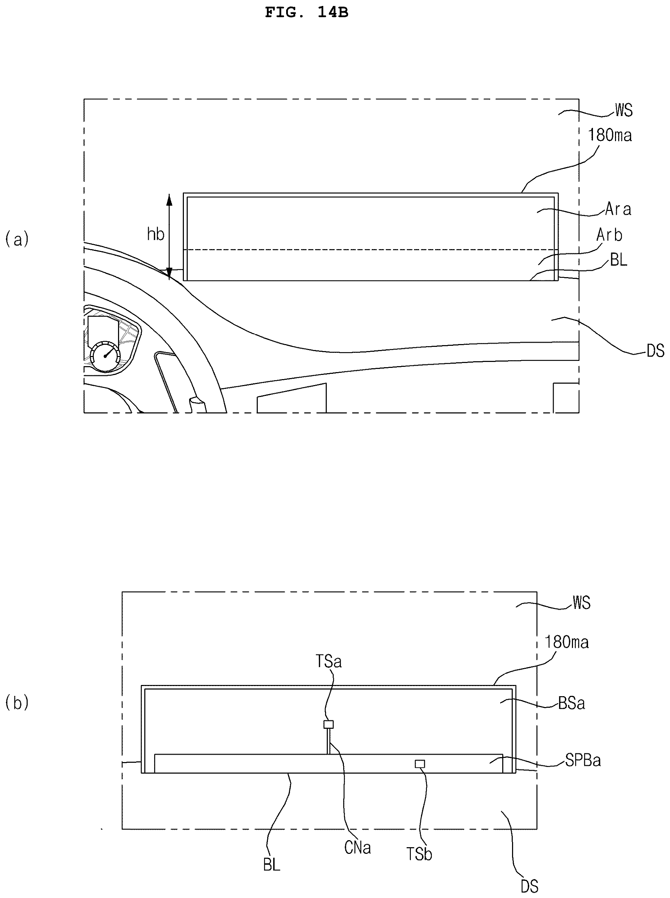

FIG. 14B illustrates the front and rear of a display in a POP up mode, according to an embodiment of the present disclosure.

Referring to the FIG. 14B, by the operation of the motor driver 183, the display 180 according to an embodiment of the present disclosure may be configured to operate in the POP up mode in which both the first display area Ara and the second display area Arb protrude on the dashboard DS, as shown in (a) of FIG. 14B.

The display 180 may have a height hb in the POP up mode, which is higher than the height ha of FIG. 14A.

In this case, the boundary BL between the first display area Ara and the second display area Arb is at a higher position than the dashboard DS, thereby being exposed to the outside.

Meanwhile, as shown in (b) of FIG. 14B, the first temperature detector TSa and the second temperature detector TSb may be disposed at the rear surface of the display 180 or the rear surface of the OLED panel 210.

Meanwhile, in the POP up mode, the circuit board SPBa and the second temperature detector TSb may be at least partially exposed above the dashboard DS.

In the POP up mode, as at least portions of the circuit board SPBa and the second temperature detector TSb are exposed to the outside, heat exchange may be more easily achieved than in the POP down mode, thereby having a lower temperature in the POP up mode.

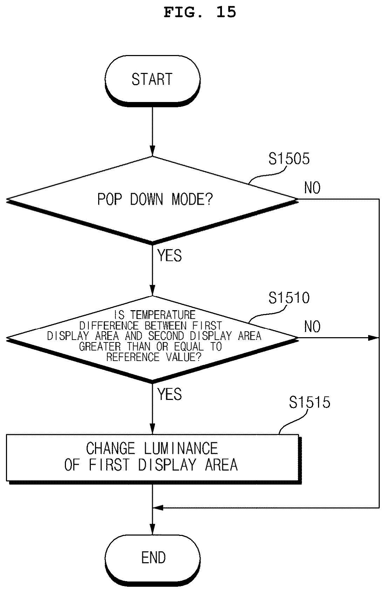

FIG. 15 is yet another exemplary flowchart illustrating the operation of a display apparatus for vehicle according to an embodiment of the present disclosure.

Referring to FIG. 15, the signal processing device 170 or the driving controller 285 according to an embodiment of the present discourse determines whether the display 180ma is in a POP down mode (S1505).

When the display 180ma is in the POP down mode, as shown in FIG. 14A, the display panel 180m has the second height ha, and only the first display area Ara, between the first display area Ara and the second display area Arb, may configured to protrude outward.

By contrast, when the display 180ma is not in the POP down mode, the display 180ma may be in a POP up mode, as shown in FIG. 14B.

When the display 180ma is in the POP down mode, the signal processing device 170 or the driving controller 285 determines whether a temperature difference between the first display area Ara and the second display area Arb is greater than or equal to a reference value (S1510).

When the temperature difference between the first display area Ara and the second display area Arb is greater than or equal to the reference value, the signal processing device 170 or the driving controller 285 may be configured to change luminance of the first display area Ara or the second display area Arb (S1515).

For example, when the temperature difference between the first display area Ara and the second display area Arb is greater than or equal to the reference value, and the temperature of the first display area Ara is higher than the temperature of the second display area Arb, the signal processing device 170 or the driving controller 285 may be configured to decrease the luminance of the first display area Ara.

As another example, when the temperature difference between the first display area Ara and the second display area Arb is greater than or equal to the reference value, and the temperature of the second display area Arb is higher than the first display area Ara, the signal processing device 170 or the driving controller 285 may be configured to decrease the luminance of the second display area Arb or the luminance of the first display area Ara. Accordingly, it is possible to reduce degradation in an adaptive manner based on the temperature of each area of the OLED panel 210.

Meanwhile, when a temperature difference between a first detected temperature and a second detected temperature is less than a reference value, the signal processing device 170 or the driving controller 285 may be configured to perform a first degradation compensation mode based on the first detected temperature or the second detected temperature.

When the temperature difference between the first detected temperature and the second detected temperature is greater than or equal to the reference value and is within an allowable value, the signal processing device 170 or the driving controller 285 may be configured to perform a second degradation compensation mode.

When the temperature difference between the first detected temperature and the second detected temperature is greater than or equal to the reference value and exceeds the allowable value, the signal processing device 170 or the driving controller 285 may be configured to control the display 180ma or the OLED panel 210 to be off, thereby protecting the panel.

Meanwhile, in the POP down mode, the signal processing device 170 or the driving controller 285 may be configured to control the first display area Ara to operate in an ON mode, and may be configured to control the second display area Arb to operate in an OFF mode in which the second display area Arb is displayed at a first luminance level.

In this case, in the POP down mode, when the first display area Ara is in the ON mode and the second display area Arb is in the OFF mode displayed at the first luminance level, the signal processing device 170 or the driving controller 285 may be configured to perform the first degradation compensation mode in case in which the temperature difference between the first detected temperature and the second detected temperate is less than the reference value.

Meanwhile, in the POP down mode, when the first display area Ara is in the ON mode and the second display area Arb is in the OFF mode displayed at the first luminance level, the signal processing device 170 or the driving controller 285 may be configured to perform the second degradation compensation mode in case in which the temperature difference between the first detected temperature and the second detected temperate is greater than or equal to the reference value.

In particular, when the temperature difference between the first detected temperature and the second detected temperate is greater than or equal to the reference value, and the first detected temperature is higher than the second detected temperature, the signal processing device 170 or the driving controller 285 may be configured to perform the second degradation compensation mode.

Meanwhile, unlike the first degradation compensation mode, the signal processing device 170 or the driving controller 285 may be configured to change the magnitude of a luminance compensation value in the second compensation mode, by further taking into consideration the temperature difference between the first detected temperature and the second detected temperature.

For example, in the second degradation compensation mode, the signal processing device 170 or the driving controller 285 may be configured to increase the magnitude of the compensation value as the temperature difference between the first detected temperature and the second detected temperature is greater than or equal to the reference value, and the temperature difference increases. Accordingly, it is possible to reduce degradation based on the temperature difference of the area in the second degradation compensation mode.

Meanwhile, in the second degradation compensation mode, the signal processing device 170 or the driving controller 285 may be configured to increase the magnitude of the compensation value as the temperature difference between the first detected temperature and the second detected temperature is greater than or equal to the reference value, and the first detected temperature or the second detected temperature increases. Accordingly, it is possible to reduce degradation based on the detected temperature in the second degradation compensation mode.

Meanwhile, in the second degradation compensation mode, the signal processing device 170 or the driving controller 285 may be configured to increase the magnitude of the compensation value as the temperature difference between the first detected temperature and the second detected temperature is greater than or equal to the reference value, and the cumulative degradation amount of the first display area Ara or the second display are Arb increases. Accordingly, it is possible to reduce degradation based on the cumulative degradation amount of the display area in the second degradation compensation mode.

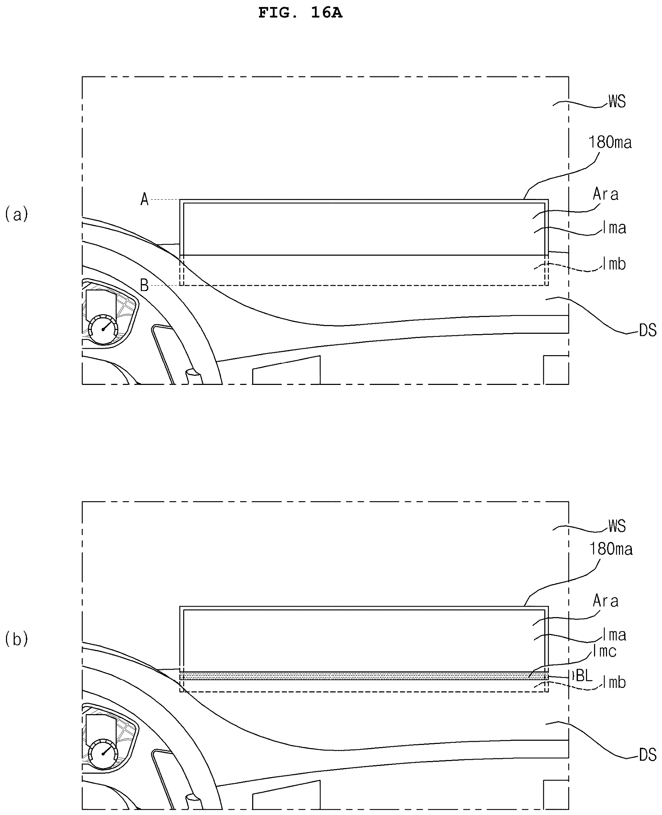

FIG. 16A illustrates an example in which luminance gradation processing is performed in a third area including a boundary BL between the first display area Ara and the second display area Arb.

Referring to FIG. 16A, in the POP down mode of the display 180ma like (a) of FIG. 16A, the signal processing device 170 or the driving controller 285 may not perform any particular processing in the vicinity of the boundary BL between the first display area Ara and the second display area Arb.

Meanwhile, in the POP up mode, visibility of the boundary BL area is reduced due to a luminance difference between the first display area Ara and the second display area Arb.

In order to address this problem, when performing the first degradation compensation mode or the second degradation compensation mode, the signal processing device 170 or the driving controller 285 according to an embodiment of the present disclosure may be configured to perform luminance gradation processing on the third area including the boundary BL between the first display area Ara and the second display area Arb.

That is, the signal processing device 170 or the driving controller 285 according to an embodiment of the present disclosure may be configured to display a luminance gradation processed image Imc in the third area including the boundary BL between the first display area Ara and the second display area Arb, as shown in (b) of FIG. 16A.

Meanwhile, a luminance level of the luminance gradation processed image Imc may have a value between a luminance level of an image Ima of the first display area Ara and a luminance level of an image Imb of the second display area Arb. The luminance difference between the first area Ara and the second area Arb allows visibility of the boundary BL area to be improved.

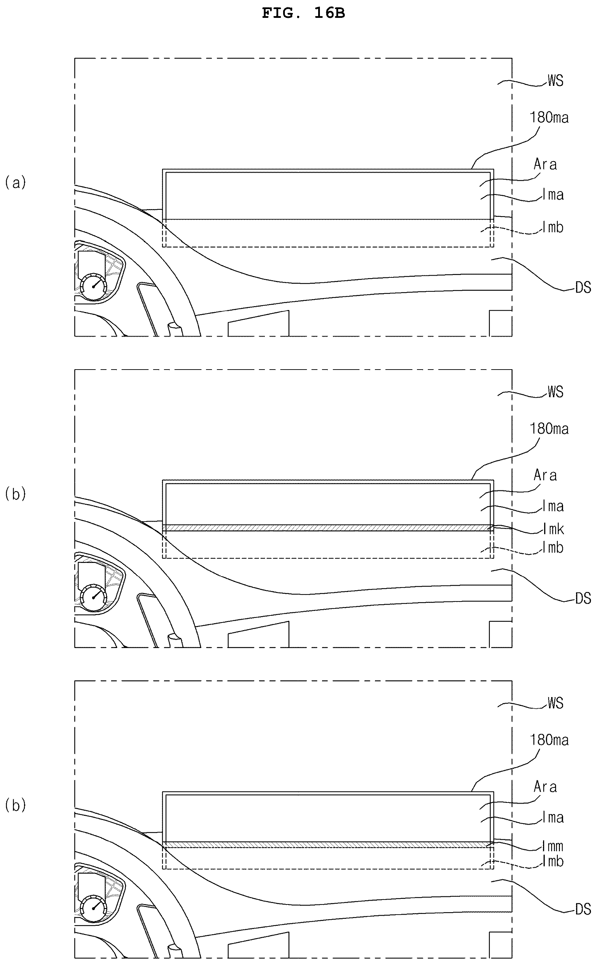

FIG. 16B illustrates various methods of increasing visibility of a boundary area of the display 180ma.

Referring to the figure, as shown in (a) of FIG. 16B, a first image Ima may be displayed on the first display area Ara of the display 180ma, and a second image Imb may be displayed on the second display area Arb of the display 180ma.

Meanwhile, as shown in (b) of FIG. 16B, the signal processing device 170 or the driving controller 285 may be configured to display a third image Imk having a luminance level between a luminance level of the first image Ima and a luminance level of the second image Imb on a boundary BL between the first display area Ara and the second display area Arb. Accordingly, it is possible to improve visibility of the boundary BL area between the first display area Ara and the second display area Arb.

Meanwhile, as shown in (c) of FIG. 16B, the signal processing device 170 or the driving controller 285 may be configured to display a fourth image Imm showing a home button or various types of information on the boundary BL between the first area Ara and the second area Arb. Accordingly, it is possible to improve visibility of the boundary BL area between the first display area Ara and the second display area Arb.

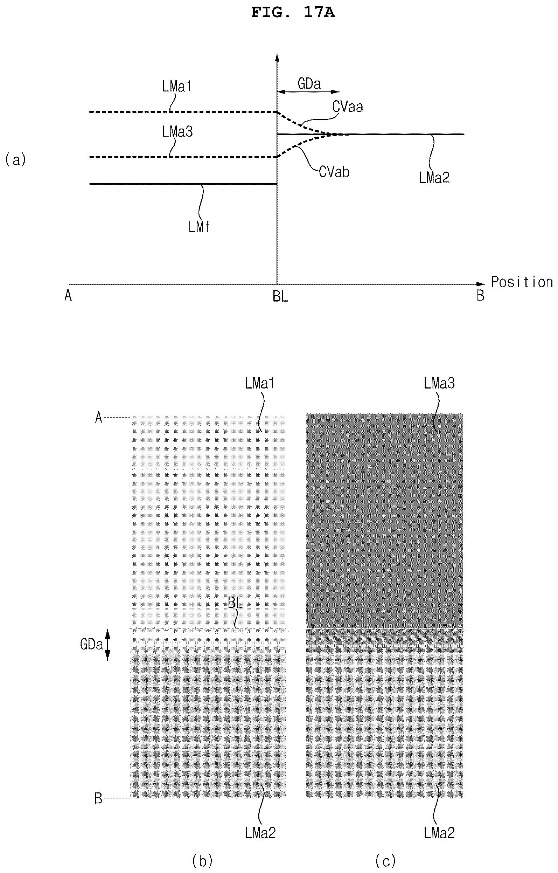

FIGS. 17A to 17C illustrate various examples of gradation processing in the boundary BL area between the first display area Ara and the second display area Arb of the display 180ma of FIG. 16A.

When a top position of the display 180ma is A, and a bottom position of the display 180ma is B, FIGS. 17A to 17C respectively illustrate a luminance level between the top and bottom of the display 180ma, etc.

(a) of FIG. 17A illustrates an example of performing gradation processing in a direction from the boundary BL to the bottom position B of the display 180ma.

As shown in (b) of FIG. 17A, when the luminance level of the first display area Ara is Lma1 and is greater than a luminance level Lma2 of the second display area Arb, the signal processing device 170 or the driving controller 285 may be configured to perform gradation processing in the form of a curve CVaa that decreases in luminance level from the boundary BL toward the bottom position B of the display 180ma. Accordingly, it is possible to improve visibility of the boundary BL area between the first display area Ara and the second display area Arb.

As shown in (c) of FIG. 17A, when the luminance level of the first display area Ara is Lma3 and is less than the luminance level Lma2 of the second display area Arb, the signal processing device 170 or the driving controller 285 may be configured to perform gradation processing in the form of a curve CVab that increases in luminance level from the boundary BL toward the bottom position B of the display 180ma. Accordingly, it is possible to improve visibility of the boundary BL area between the first display area Ara and the second display area Arb.

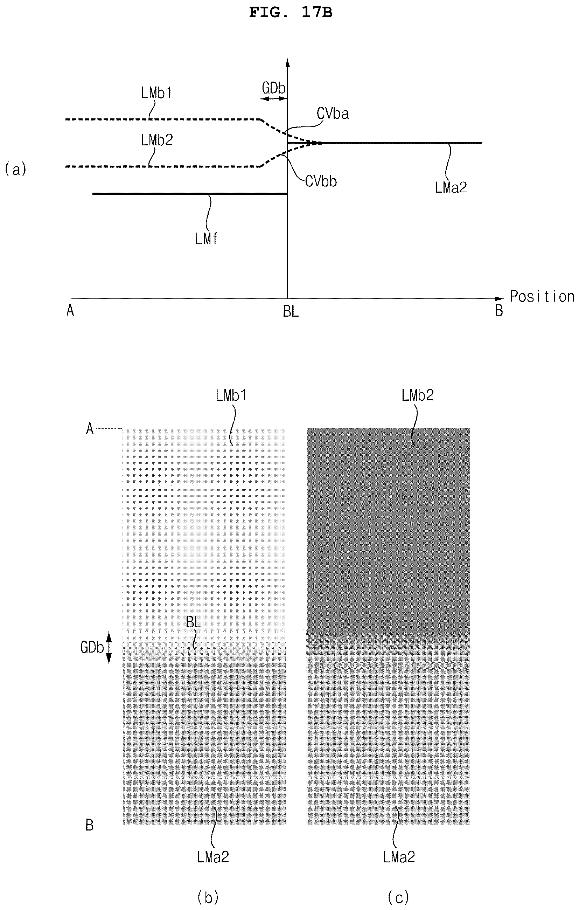

(a) of FIG. 17B illustrates an example of performing gradation processing at the boundary BL.

As shown in (b) of FIG. 17B, when the luminance level of the first display area Ara is Lmb1 and is greater than a luminance level Lma2 of the second display area Arb, the signal processing device 170 or the driving controller 285 may be configured to perform gradation processing in the form of a curve CVba that increases in luminance level in a direction from the bottom position B of the display 180ma to the top position A of the display 180ma with respect to the boundary BL. Accordingly, it is possible to improve visibility of the boundary BL area between the first display area Ara and the second display area Arb.

As shown in (c) of FIG. 17B, when the luminance level of the first display area Ara is Lmb2 and is less than the luminance level Lma2 of the second display area Arb, the signal processing device 170 or the driving controller 285 may be configured to perform gradation processing in the form of a curve CVbb that decreases in luminance level in a direction from the bottom position B of the display 180ma to the top position A of the display 180ma with respect to the boundary BL. Accordingly, it is possible to improve visibility of the boundary BL area between the first display area Ara and the second display area Arb.

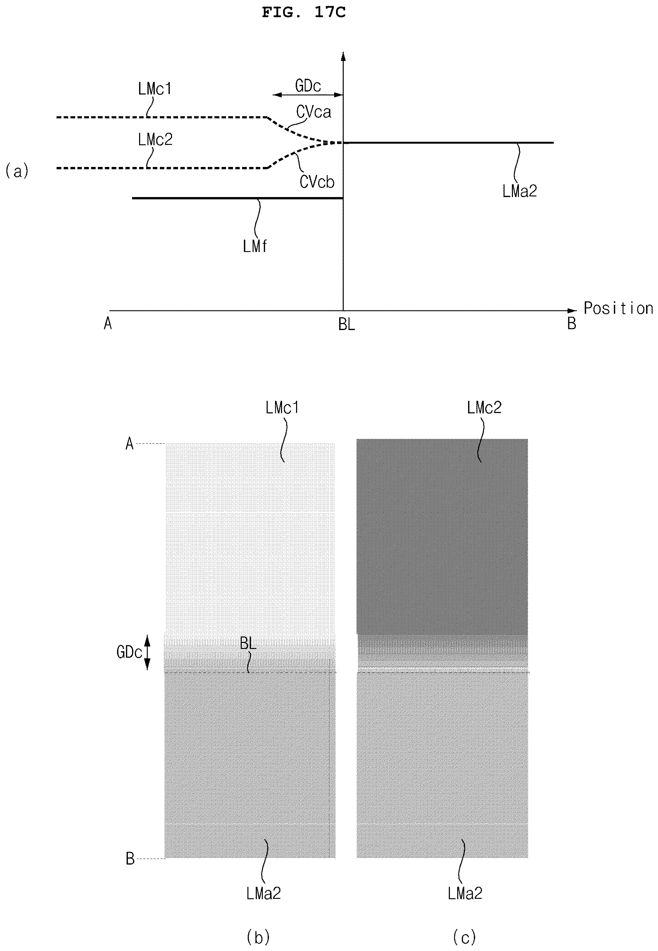

(a) of FIG. 17C illustrates an example of performing gradation processing in a direction from the boundary BL to the top position A of the display 180ma.

As shown in (b) of FIG. 17C, when the luminance level of the first display area Ara is Lmc1 and is greater than a luminance level Lma2 of the second display area Arb, the signal processing device 170 or the driving controller 285 may be configured to perform gradation processing in the form of a curve CVca that increases in luminance level from the boundary BL toward the top position A of the display 180ma. Accordingly, it is possible to improve visibility of the boundary BL area between the first display area Ara and the second display area Arb.

As shown in (c) of FIG. 17C, when the luminance level of the first display area Ara is Lmc2 and is less than the luminance level Lma2 of the second display area Arb, the signal processing device 170 or the driving controller 285 may be configured to perform gradation processing in the form of a curve CVcb that decreases in luminance level from the boundary BL toward the top position A of the display 180ma. Accordingly, it is possible to increase visibility of the boundary BL area between the first display area Ara and the second display area Arb.

Meanwhile, upon performing the first degradation compensation mode or the second degradation compensation mode, the signal processing device 170 or the driving controller 285 may be configured to perform a pixel shift, a first direction line shift, or a second direction line shift.

Meanwhile, as various examples of degradation compensation, the signal processing device 170 or the driving controller 285 may be configured to perform a pixel shift or a line shift.

For example, upon performing the first degradation compensation mode or the second degradation compensation mode, the signal processing device 170 or the driving controller 285 may be configured to further perform a pixel shift, a first direction line shift (a line shift along a first direction), or a second direction line shift (a line shift along a second direction), thereby reducing degradation.

Meanwhile, the display 180ma of FIGS. 13 to 17C may be configured to operate in the POP up mode or the POP down mode, three areas of the display 180ma may respectively operate as the public area and the privacy area, as illustrated in FIG. 9A.

For example, in the POP up mode or in the POP down mode, the signal processing device 170 may be configured to control a cluster area corresponding to the first area Ar1 of the display 180ma to operate as the public area, an information display area corresponding to the second area Ar2 of the display 180ma to operate as the public area, and a passenger seat area corresponding to the third area Ar3 of the display 180ma to operate as the privacy area. This allows the display to operate as a switchable privacy display.

Meanwhile, when the boundary area Arma between the second area Ar2 corresponding to the public area and the third area Ar3 corresponding to the privacy area in the display 180ma is deteriorated, the signal processing device 170 may be configured to convert a part Arma of the second area Ar2, which is the public area, to the privacy area, as illustrated in (b) of FIG. 12. Accordingly, it is possible to reduce degradation of the boundary area.

Meanwhile, when the boundary area Arna between the second area Ar2 corresponding to the public area and the first area Ar1 corresponding to the privacy area in the display 180ma is deteriorated, the signal processing device 170 may be configured to convert a part Arna of the second area Ar2, which is the public area, to the privacy area, as illustrated in (b) of FIG. 12B. Accordingly, it is possible to reduce degradation of the boundary area.

It will be apparent that, although the preferred embodiments have been shown and described above, the present disclosure is not limited to the above-described specific embodiments, and various modifications and variations can be made by those skilled in the art without departing from the scope of the present disclosure as defined by the appended claims. Thus, it is intended that the modifications and variations should not be understood independently of the technical idea or perspective of the present disclosure.

## Claims

1. A display apparatus for a vehicle, the display apparatus comprising:
a display including an organic light emitting diode (OLED) panel comprising a public pixel and a privacy pixel; and
a signal processing device configured to output an image signal to the display,
wherein the signal processing device is configured to:
divide and display an image into a public area based on the public pixel and a privacy area based on the privacy pixel; and
sequentially move a boundary area between the public area and the privacy area.

2. The display apparatus of claim 1, wherein the signal processing device is configured to sequentially move the boundary area toward the public area and then move toward the privacy area, or to sequentially move the boundary area toward the privacy area and then move toward the public area.

3. The display apparatus of claim 1, wherein, in response to a boundary area between the public area based on the public pixel and the privacy area based on the privacy pixel being deteriorated or a luminance difference between the public area and the privacy area being greater than or equal to a predetermined value, the signal processing device is configured to convert a part of the public area to the privacy area.

4. The display apparatus of claim 3, wherein, in response to the boundary area being deteriorated, the signal processing device is configured to perform a degradation compensation mode for a surrounding area of the boundary area.

5. The display apparatus of claim 3, wherein, in response to the boundary area being deteriorated, the signal processing device is configured to convert a part of the public area to the privacy area.

6. The display apparatus of claim 3, wherein, in response to the boundary area being deteriorated, the signal processing device is configured to sequentially increase an area converted from the public area to the privacy area.

7. The display apparatus of claim 3, wherein, based on a cumulative degradation amount of the boundary area, the signal processing device is configured to change a size of an area converted from the public area to the privacy area.

8. The display apparatus of claim 3, wherein, in response to the luminance difference between the public area and the privacy area being greater than or equal to the predetermined value, the signal processing device is configured to sequentially increase an area converted from the public area to the privacy area.

9. The display apparatus of claim 3, wherein the signal processing device is configured to increase a size of an area converted from the public area to the privacy area as the luminance difference between the public area and the privacy area increases.

10. The display apparatus of claim 3, wherein, in response to a second part of the public area being deteriorated, the signal processing device is configured to perform a second degradation compensation mode.

11. The display apparatus of claim 1, wherein the signal processing device is configured to change a size of the public area or the privacy area based on an image display mode or a vehicle speed.

12. The display apparatus of claim 1, wherein the signal processing device is configured to:
control a cluster area corresponding to a first area of the display to operate as the public area;
control an information display area corresponding to a second area of the display to operate as the public area; and
control a passenger seat area corresponding to a third area of the display to operate as the privacy area.

13. The display apparatus of claim 12, wherein, in response to the boundary area between the second area and the third area being deteriorated or a luminance difference between the second area and the third area being greater than or equal to a predetermined value, the signal processing device is configured to convert a part of the second area to the privacy area.

14. The display apparatus of claim 1, wherein the signal processing device is configured to:
control a cluster area corresponding to a first area of the display to operate as the privacy area;
control an information display area corresponding to a second area of the display to operate as the public area; and
control a passenger seat area corresponding to a third area of the display to operate as the privacy area.

15. The display apparatus of claim 14, wherein, in response to the boundary area between the second area and the third area being deteriorated or a luminance difference between the second area and the third area being greater than or equal to a predetermined value, the signal processing device is configured to convert a part of the second area to the privacy area.

16. The display apparatus of claim 14, wherein, in response to the boundary area between the first area and the second area being deteriorated or a luminance difference between the first area and the second area being greater than or equal to a predetermined value, the signal processing device is configured to convert a part of the second area to the privacy area.

17. The display apparatus of claim 1, further comprising:
a first temperature detector disposed in a first area of a rear surface of the OLED panel; and
a second temperature detector disposed in a second area of the rear surface of the OLED panel,
wherein the signal processing device is configured to perform a first degradation compensation mode or a second degradation compensation mode based on a temperature difference between a first detected temperature by the first temperature detector and a second detected temperature by the second temperature detector.

18. The display apparatus of claim 17, further comprising a motor driver configured to adjust a height of the OLED panel,
wherein the signal processing device is configured to:
perform the first degradation compensation mode in a POP up mode in which the height of the OLED panel is a first height; and
in a POP down mode in which the height of the OLED panel is a second height less than the first height, perform the second degradation compensation mode in response to a temperature difference between the first detected temperature and the second detected temperature being greater than or equal to a reference value, and the first detected temperature being greater than the second detected temperature.

19. The display apparatus of claim 1, further comprising:
a first temperature detector disposed in a first area of a rear surface of the OLED panel;
a second temperature detector disposed in a second area of the rear surface of the OLED panel; and
a motor driver configured to adjust a height of the OLED panel,
wherein, in a POP down mode in which a height of the OLED panel decreases, the signal processing device is configured to change luminance of the first area or the second area in response to a temperature difference between the first area and the second area being greater than or equal to a reference value.

20. A display apparatus for a vehicle, the display apparatus comprising:
a display including an organic light emitting diode (OLED) panel comprising a public pixel and a privacy pixel; and
a signal processing device configured to output an image signal to the display,
wherein, in response to a boundary area between a public area based on the public pixel and a privacy area based on the privacy pixel being deteriorated or a luminance difference between the public area and the privacy area being greater than or equal to a predetermined value, the signal processing device is configured to convert a part of the public area to the privacy area.
